# EUROPÄISCHE PATENTSCHRIFT

(11) **EP 2 089 447 B1**
(45) Veröffentlichungstag und Bekanntmachung des Hinweises auf die Patenterteilung: **19.05.2010**
(21) Anmeldenummer: 07822063.9
(22) Anmeldetag: 31.10.2007
(51) Int. Cl.: C08G 18/10, C08G 18/28, C08G 18/32, C09J 175/04, C09K 3/10

(54) **POLYURETHANZUSAMMENSETZUNG MIT GUTER ANFANGSFESTIGKEIT**
POLYURETHANE COMPOSITION WITH GOOD INITIAL STRENGTH
COMPOSITION DE POLYURÉTHANNE AYANT UNE BONNE RÉSISTANCE INITIALE

(30) Priorität: 31.10.2006 EP 06123228
(43) Veröffentlichungstag der Anmeldung: 19.08.2009
(73) Patentinhaber: Sika Technology AG, 6340 Baar (CH)
(72) Erfinder: BURCKHARDT, Urs, 8049 Zürich (CH); SCHLUMPF, Michael, 8143 Stallikon (CH)
(74) Vertreter: Sika Patent Attorneys
(86) Internationale Anmeldenummer: PCT/EP2007/061712
(87) Internationale Veröffentlichungsnummer: WO 2008/052999

(56) Entgegenhaltungen:
- EP-A- 0 469 751
- WO-A-2004/013088
- DE-A- 4 311 923
- US-A- 5 166 302

## Beschreibung

### Technisches Gebiet

Die Erfindung betrifft warm applizierbare, einkomponentige, feuchtigkeitshärtende Polyurethanzusammensetzungen enthaltend eine Schmelzkomponente, welche geeignet sind als elastische Klebstoffe mit einer guten Anfangsfestigkeit.

### Stand der Technik

Polyurethanzusammensetzungen werden unter anderem eingesetzt für verschiedenartige Verklebungen und Abdichtungen. Speziell geeignet sind sie für Verklebungen oder Abdichtungen, welche eine Elastizität der Klebeverbindung erfordern. Für gewisse Klebeanwendungen ist es erforderlich, dass die Klebeverbindung unmittelbar nach der Applikation des Klebstoffs einer gewissen mechanischen Belastung ausgesetzt werden kann, beispielsweise weil die verklebten Bauteile bewegt oder eine Fixierhilfe entfernt werden sollen. Um solche frühzeitigen Belastungen zu ermöglichen, soll die Klebeverbindung eine gute sogenannte Anfangsfestigkeit aufweisen, das heisst in bestimmter Weise belastbar sein zu einem Zeitpunkt, an dem der Klebstoff chemisch noch nicht ausgehärtet ist. Der Verlauf des Festigkeitsaufbaus soll überdies in einem breiten Bereich variierbar sein, damit Offenzeit und Anfangsfestigkeit des Klebstoffs auf die Bedürfnisse eines Klebeprozesses eingestellt werden können.
Einkomponentige Polyurethanzusammensetzungen sind einfach in der Handhabung. Sie härten durch die Reaktion mit Feuchtigkeit, üblicherweise Luftfeuchtigkeit, wobei die Aushärtung naturgemäss von aussen nach innen erfolgt. Die Aushärtungsgeschwindigkeit nimmt gegen innen ab, da das für die Aushärtung erforderliche Wasser durch die zunehmend dicker werdende Polymerschicht ("Haut") hindurchdiffundieren muss. Wegen der relativ langsamen Aushärtung lassen sich mit normalen einkomponentigen Polyurethanzusammensetzungen als Klebstoffe keine guten Anfangsfestigkeiten erreichen.

Klebstoffzusammensetzungen mit guter Anfangsfestigkeit sind beispielsweise sogenannte Warmschmelzklebstoffe (Warmmelts), welche bei Raumtemperatur eine pastöse bis nahezu feste Konsistenz haben und zur Applikation erwärmt werden, typischerweise auf eine Temperatur im Bereich von 40 °C bis 80 °C. Die Anfangsfestigkeit eines solchen Klebstoffs wird nicht primär durch eine chemische Reaktion, sondern durch eine starke Viskositätserhöhung beim Abkühlen erhalten, welche durch das physikalische Erstarren eines Bestandteils des Klebstoffs, der sogenannten Schmelzkomponente, zustande kommt. Die Schmelzkomponente stellt dabei eine bei Raumtemperatur feste Substanz dar, welche beim Aufheizen des Klebstoffs auf die Applikationstemperatur schmilzt und beim erneuten Abkühlen des Klebstoffs innerhalb einer gewissen Zeit wieder erstarrt, beispielsweise durch Kristallisation.
Warmschmelzklebstoffe in Form von einkomponentigen Polyurethanzusammensetzungen sind beispielsweise aus US 5,367,036 bekannt. Die dort beschriebene Zusammensetzung enthält neben einem Isocyanatgruppen aufweisenden Polyurethanpolymer eine Schmelzkomponente in Form eines nichtreaktiven Polyurethanpolymers, dessen Isocyanatgruppen mit einem Monoalkohol umgesetzt wurden. Die Schmelzkomponente bewirkt eine Viskositätserhöhung und führt zu einer guten Anfangsfestigkeit. Die Verwendung eines nichtreaktiven Polyurethanpolymers als Schmelzkomponente weist aber den Nachteil auf, dass dieses bei der chemischen Aushärtung der Zusammensetzung mittels Feuchtigkeit nicht in die Polyurethan-Matrix eingebaut wird. Die Schmelzkomponente kann deshalb aus der ausgehärteten Zusammensetzung migrieren und so unerwünschte Effekte auf der Oberfläche verursachen, oder zu geringerer chemischer Beständigkeit, niedrigerer mechanischer Festigkeit und/oder schlechteren Haftungseigenschaften der ausgehärteten Zusammensetzung führen.
WO 95/00572 A1 beschreibt warm applizierbare Klebstoffe, welche ein flüssiges reaktives Prepolymer und eine damit mindestens teilweise unverträgliche Schmelzkomponente enthalten, welche vorzugsweise ein Prepolymer mit Isocyanat-Endgruppen darstellt. US 5,166,302 und US 5,173,538 beschreiben warm, beziehungsweise heiss, applizierbare Klebstoffzusammensetzungen, die neben einem flüssigen Polyurethanpolymer eine reaktive Schmelzkomponente in Form eines Isocyanatgruppen aufweisenden Polyurethanpolymers enthalten. Die in diesen Patentschriften beschriebenen, Isocyanatgruppen aufweisenden Schmelzkomponenten werden bei der chemischen Aushärtung des Klebstoffs mittels Feuchtigkeit in die Polyurethan-Matrix eingebaut. Sie neigen aber dazu, im Klebstoff beim Abkühlen sehr schnell zu erstarren und dadurch zu einer geringen Offenzeit zu führen und/oder im ausgehärteten Klebstoff Spannungen zu verursachen, welche sich nachteilig auf die Festigkeit des Klebeverbundes auswirken können. Weitere Nachteile der beschriebenen reaktiven Schmelzkomponenten liegen darin, dass diese nur bedingt lagerstabil sind und vorzeitig vernetzen können, was ihre Viskosität und ihr Erstarrungsverhalten negativ beeinflusst. Zudem kann es bei der Aushärtung der beschriebenen Klebstoffe, insbesondere bedingt durch den erhöhten Gehalt an Isocyanatgruppen, vermehrt zu Blasenbildung kommen.

### Darstellung der Erfindung

Aufgabe der vorliegenden Erfindung ist es daher, warm applizierbare einkomponentige feuchtigkeitshärtende Polyurethanzusammensetzungen zur Verfügung zu stellen, welche bei geeigneten Applikationseigenschaften und einstellbarer Offenzeit eine gute Anfangsfestigkeit aufweisen, mittels Feuchtigkeit blasenfrei aushärten und nach erfolgter Aushärtung über gute Elastizität und mechanische Festigkeit verfügen.
Überraschenderweise wurde gefunden, dass Zusammensetzungen nach Anspruch 1 diese Aufgabe lösen. Diese enthalten neben mindestens einem bei Raumtemperatur flüssigen, Isocyanatgruppen aufweisenden Polyurethanpolymer mindestens eine Schmelzkomponente in Form eines bei Raumtemperatur festen, Aldimingruppen aufweisenden Polyurethanpolymers, welches sich durch Umsetzung von entsprechenden, Isocyanatgruppen aufweisenden Polyurethanpolymeren mit speziellen Verbindungen, welche eine oder mehrere Aldimingruppen sowie einen aktiven Wasserstoff enthalten, herstellen lässt und bei der Aushärtung der Zusammensetzung mittels Feuchtigkeit in die Polyurethan-Matrix eingebaut wird. In einer bevorzugten Ausführungsform der Erfindung enthält die Zusammensetzung als Schmelzkomponente ein festes, Aldimingruppen aufweisendes Polyurethanpolymer, das gänzlich frei ist von Isocyanatgruppen. Eine solche Zusammensetzung verändert sich bei der Lagerung, insbesondere auch bei erhöhter Temperatur, besonders wenig in ihren Applikations- und Aushärtungseigenschaften.
Ein weiterer Aspekt der Erfindung betrifft eine ausgehärtete Zusammensetzung gemäss Anspruch 16, sowie die Verwendung der Zusammensetzung als Warmschmelzklebstoff und ein Verfahren zur Verklebung und aus einem derartigen Verfahren resultierende Artikel.
In einem weiteren Aspekt betrifft die Erfindung ein Verfahren zur Beeinflussung der Offenzeit und der Anfangsfestigkeit einer als Warmschmelzklebstoff einsetzbaren einkomponentigen feuchtigkeitshärtenden Polyurethanzusammensetzung, indem eine Isocyanatgruppen aufweisende Schmelzkomponente vorgängig mit speziellen Verbindungen, welche eine oder mehrere Aldimingruppen sowie einen aktiven Wasserstoff enthalten, teilweise oder vollständig umgesetzt wird.
In einem weiteren Aspekt schliesslich betrifft die Erfindung ein spezielles Aldimingruppen aufweisendes Polyurethanpolymer, das im geschmolzenen Zustand lagerstabil ist, das heisst sich in seinen Viskositäts- und Erstarrungseigenschaften wenig oder gar nicht verändert, und sich hervorragend eignet als Schmelzkomponente oder als Verdickungsmittel oder als Thixotropiermittel für einkomponentige Polyurethanzusammensetzungen.

### Wege zur Ausführung der Erfindung

Gegenstand der Erfindung ist in einem ersten Aspekt eine einkomponentige feuchtigkeitshärtende Zusammensetzung umfassend
a) mindestens ein bei Raumtemperatur flüssiges, Isocyanatgruppen aufweisendes Polyurethanpolymer **P1**, und
b) mindestens ein bei Raumtemperatur festes, Aldimingruppen aufweisendes Polyurethanpolymer **A** der Formel (I a) oder (I b) mit einem Schmelzpunkt im Bereich von 40 °C bis 80 °C, 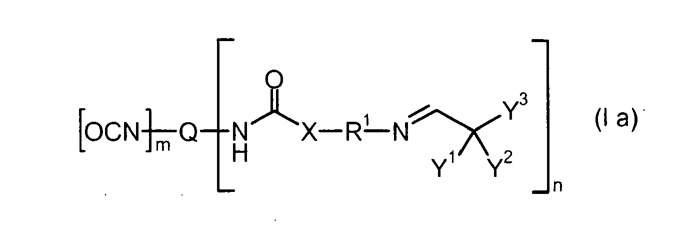 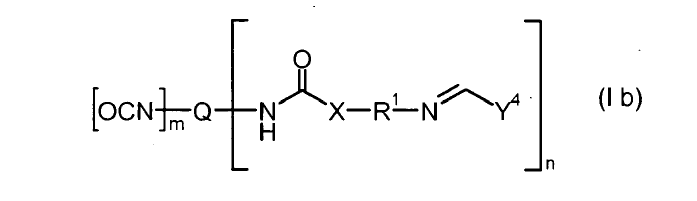
wobei
Q für den Rest eines bei Raumtemperatur festen Polyurethanpolymers **P2** mit einem Schmelzpunkt im Bereich von 40 °C bis 80 °C nach Entfernung von m+n Isocyanatgruppen steht;
n für 1 oder 2 oder 3 steht, und
m für 0 oder 1 oder 2 steht,
mit der Massgabe, dass m+n für 2 oder 3 steht;
Y¹ und Y² entweder unabhängig voneinander jeweils für einen einwertigen Kohlenwasserstoffrest mit 1 bis 12 C-Atomen stehen, oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht;
Y⁴ entweder
für eine substituierte oder unsubstituierte Aryl- oder Heteroaryl-Gruppe, welche eine Ringgrösse zwischen 5 und 8, bevorzugt 6, Atomen aufweist, steht,
oder für 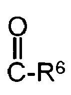 steht, wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht;
R¹ entweder für einen zweiwertigen Kohlenwasserstoffrest mit 2 bis 12 C-Atomen, welcher gegebenenfalls mindestens ein Heteroatom, insbesondere in der Form von Ether-Sauerstoff oder tertiärem Amin-Stickstoff, enthält, steht, oder, falls X für N-R^{2'} steht, zusammen mit R^{2'} für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht;
X für O oder für S oder für N-R² oder für N-R^{2'} steht, wobei
R² entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht,
oder für einen Substituenten der Formel (II a) oder (II b) steht, 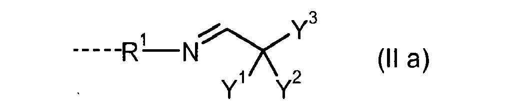 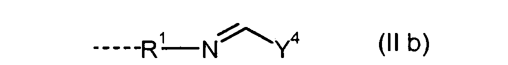 wobei R¹, Y¹, Y², Y³ und Y⁴ die bereits genannten Bedeutungen aufweisen;
und wobei R^{2'} zusammen mit R¹ für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht.

Die gestrichelten Linien in den Formeln in diesem Dokument stellen jeweils die Bindung zwischen einem Substituenten und dem zugehörigen Molekülrest dar.

Die einkomponentige feuchtigkeitshärtende Zusammensetzung ist geeignet als warm applizierbarer Klebstoff, insbesondere für industrielle Verklebungen.

Mit "Poly" beginnende Substanznamen wie Polyaldimin, Polyisocyanat, Polyol oder Polyamin bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Als "Schmelzpunkt" einer Substanz wird im vorliegenden Dokument das Maximum der mittels Wärmeflusskalorimetrie (differential scanning calorimetry, DSC) gemessenen Aufheizkurve bei einer Aufheizrate von 2 °C/min bezeichnet.
Als "Raumtemperatur" wird eine Temperatur von 25 °C bezeichnet.
Als "Anfangsfestigkeit" eines Warmschmelzklebstoffs wird die Festigkeit bezeichnet, die eine Verklebung nach dem Fügen der Fügeteile und der Abkühlung des Klebstoffs auf Raumtemperatur aufweist zu einem Zeitpunkt, an dem die chemische Aushärtung des Klebstoffs mittels Feuchtigkeit noch nicht wesentlich fortgeschritten ist.
Die "Offenzeit" eines Klebstoffs, auch "offene Zeit" genannt, bezeichnet die vom Zeitpunkt der Applikation des Klebstoffs gerechnete Zeitspanne, innerhalb der die Fügeteile spätestens zusammengefügt werden müssen. Die Offenzeit bei einem Warmschmelzklebstoff wird bestimmt durch die maximale Verpresskraft, die in einem Fertigungsprozess aufgewendet werden kann, um den applizierten Klebstoff mittels des Fügeteils auf die für die Verklebung gewünschte Dicke zu verpressen. Typischerweise sollte die Verpresskraft nicht mehr als 8 N/cm betragen.

Die einkomponentige feuchtigkeitshärtende Zusammensetzung umfasst mindestens ein bei Raumtemperatur flüssiges, Isocyanatgruppen aufweisendes Polyurethanpolymer **P1**.
Ein geeignetes Polyurethanpolymer **P1** ist beispielsweise erhältlich durch die Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft beträgt das Verhältnis zwischen Isocyanat- und HydroxylGruppen 1.2 bis 5, insbesondere von 1.5 bis 3. Bevorzugt verbleibt nach der Umsetzung aller Hydroxylgruppen des Polyols ein Gehalt an freien Isocyanatgruppen von 0.5 bis 5 Gewichts-%, bezogen auf das gesamte Polyurethanpolymer **P1**.
Gegebenenfalls kann das Polyurethanpolymer **P1** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers **P1** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von Noveon) hergestellt werden können.

Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.

Bei Raumtemperatur feste Polyole sind nur in relativ geringer Menge als Bestandteil einer Polyolmischung zur Herstellung eins bei Raumtemperatur flüssigen Polyurethanpolymers **P1** geeignet.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P1** mitverwendet werden.

Als Polyisocyanate für die Herstellung eines Isocyanatgruppen enthaltenden Polyurethanpolymers **P1** können handelsübliche aliphatische, cycloaliphatische oder aromatische Polyisocyanate, insbesondere Diisocyanate, verwendet werden, beispielsweise die folgenden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind MDI, TDI, HDI und IPDI.

Üblicherweise ist das Polyurethanpolymer **P1** in einer Menge von 10 - 80 Gewichts-%, bevorzugt in einer Menge von 15 - 50 Gewichts-%, bezogen auf die gesamte Zusammensetzung, vorhanden.

Die einkomponentige feuchtigkeitshärtende Zusammensetzung enthält neben dem bei Raumtemperatur flüssigen Polyurethanpolymer **P1** ein bei Raumtemperatur festes, Aldimingruppen aufweisendes Polyurethanpolymer **A** der Formel (I a) oder (I b) mit einem Schmelzpunkt im Bereich von 40 °C bis 80 °C, insbesondere im Bereich von 50 °C bis 70 °C, 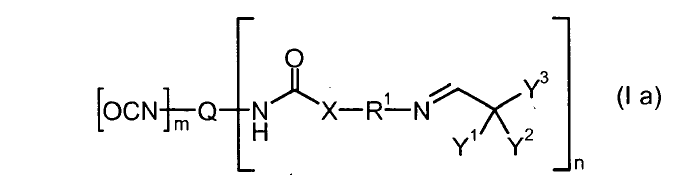 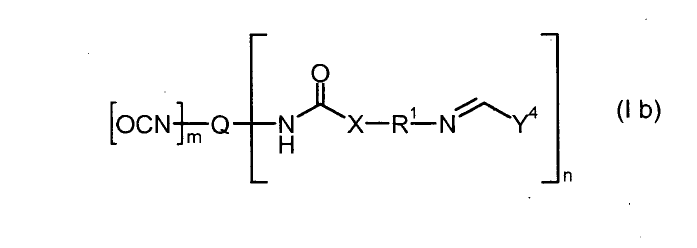 wobei Q, X, m, n, R¹, Y¹, Y², Y³ und Y⁴ die bereits erwähnten Bedeutungen aufweisen.
Bevorzugt steht m+n für 2.
Bevorzugt stehen Y¹ und Y² jeweils für eine Methylgruppe.
Bevorzugt steht Y³ für einen Rest der Formel (VII') oder (VIII'), 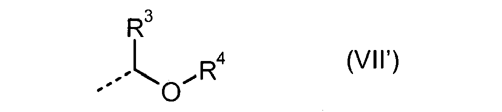 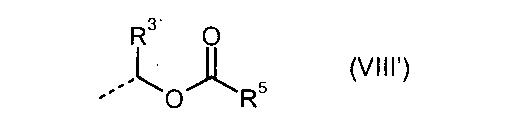 wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 12 bis 30, C-Atomen, der gegebenenfalls Heteroatome enthält, steht;
und
R⁵ entweder
für ein Wasserstoffatom steht,
oder für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder für einen einfach oder mehrfach ungesättigten, linearen oder verzweigten Kohlenwasserstoffrest mit 5 bis 30 C-Atomen steht,
oder für einen, gegebenenfalls substituierten, aromatischen oder heteroaromatischen 5- oder 6-gliedrigen Ring steht.

Aufgrund seiner Eigenschaft, beim Abkühlen einer warm applizierten Mischung mit einem flüssigen, Isocyanatgruppen aufweisenden Polyurethanpolymer **P1** rasch zu erstarren und dadurch in der Mischung eine deutliche Viskositätserhöhung zu bewirken, ist das Polyurethanpolymer **A** hervorragend geeignet als Schmelzkomponente in Isocyanatgruppen aufweisenden Zusammensetzungen, welche warm, das heisst bei einer Temperatur im Bereich von 40 °C bis 100 °C, insbesondere bei 40 °C bis 80 °C, appliziert werden und kurz nach der Applikation über eine gute Anfangsfestigkeit verfügen.
Das Polyurethanpolymer **A** ist erhältlich durch die Umsetzung eines bei Raumtemperatur festen, Isocyanatgruppen aufweisenden Polyurethanpolymers **P2** der Formel (III) mit einem Schmelzpunkt im Bereich von 40 °C bis 80 °C, insbesondere im Bereich von 50 °C bis 70 °C, mit einem Aldimin **D** der Formel (IV a) oder (IV b), welches einen aktiven Wasserstoff aufweist, wobei Q, X, m, n und die Reste R¹, Y¹, Y², Y³ und Y⁴ die bereits erwähnten Bedeutungen aufweisen.

Q⁅NCO]ₘ₊ₙ (III)

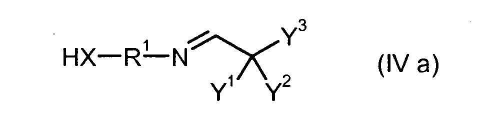

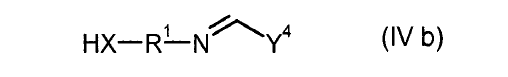

Diese Umsetzung wird vorteilhaft bei einer Temperatur durchgeführt, bei welcher das Polyurethanpolymer **P2** im flüssigen Zustand vorliegt, gegebenenfalls unter Mitverwendung geeigneter Katalysatoren, wobei das Aldimin **D** in Bezug auf die Isocyanatgruppen des Polyurethanpolymers **P2** stöchiometrisch, leicht überstöchiometrisch oder unterstöchiometrisch dosiert ist.
In einer ersten Ausführungsform ist das Aldimin **D** in Bezug auf die Isocyanatgruppen des Polyurethanpolymers **P2** unterstöchiometrisch, das heisst mit weniger als einem Molequivalent Gruppierungen "HX" auf ein Molequivalent Isocyanatgruppen, dosiert. Auf diese Weise enthält die vorgängig beschriebene Zusammensetzung mindestens ein Isocyanat- und Aldimingruppen aufweisendes Polyurethanpolymer **A**, bei welchem also der Index m in Formel (I a) oder Formel (I b) für 1 oder 2, bevorzugt für 1, steht.
In einer zweiten Ausführungsform ist das Aldimin **D** in Bezug auf die Isocyanatgruppen des Polyurethanpolymers **P2** stöchiometrisch oder leicht überstöchiometrisch, das heisst mit genau einem oder etwas mehr als einem Molequivalent Gruppierungen "HX" auf ein Molequivalent Isocyanatgruppen, dosiert. Auf diese Weise entstehen bei Raumtemperatur feste Aldimingruppen aufweisende Polyurethanpolymere **A**, welche keine Isocyanatgruppen enthalten, bei welchen also der Index m in Formel (I a) oder Formel (I b) für null steht und welche im Folgenden als Polyurethanpolymere **A1** bezeichnet werden.
Als Polyurethanpolymer **A** bevorzugt sind Polyurethanpolymere **A1**, da diese aufgrund der Abwesenheit von Isocyanatgruppen - auch bei erhöhter Temperatur besonders lagerstabil sind. Insbesondere kann das Polyurethanpolymer **A1** im flüssigen Zustand, das heisst bei einer Temperatur oberhalb seines Schmelzpunkts, während längerer Zeit, typischerweise während mehrerer Wochen oder Monate, gelagert werden, ohne dass seine Viskosität bedeutend ansteigt. Dies steht im Gegensatz zum Verhalten von Isocyanatgruppen aufweisenden Schmelzkomponenten, wie sie aus dem Stand der Technik bekannt sind. Bedingt durch die hohe Reaktionsfähigkeit der Isocyanatgruppen, steigt die Viskosität solcher Schmelzkomponenten bei der Lagerung, insbesondere bei erhöhter Temperatur, typischerweise rasch an, was bis zur Gelierung führen kann. Die gute Lagerstabilität des Polyurethanpolymers **A** ist von erheblicher praktischer Bedeutung, da sich dadurch die erfindungsgemässe Zusammensetzung während der Lagerung, auch bei erhöhter Temperatur, in ihren Applikations- und Aushärtungseigenschaften nicht oder nur wenig verändert und insbesondere weitgehend konstante, von Herstelldatum und Lagerbedingungen wenig abhängige Werte für die Offenzeit und die Anfangsfestigkeit aufweist.
Ebenfalls bevorzugt sind Polyurethanpolymere **A**, bei denen X in Formel (I a) oder (I b) für Sauerstoff oder für N-R² oder für N-R^{2'} steht.
Speziell bevorzugt sind Polyurethanpolymere **A**, bei denen X in Formel (I a) oder (I b) für Sauerstoff oder für N-R² steht, wobei R² für einen Kohlenwasserstoffrest mit 1 bis 4 C-Atomen, insbesondere für Methyl, Ethyl, Propyl oder Butyl, bevorzugt für Methyl, steht. Zusammensetzungen enthaltend diese Schmelzkomponenten zeigen einen schnellen Aufbau der Anfangsfestigkeit.

Bevorzugt sind Polyurethanpolymere **A** der Formel (I a). Speziell bevorzugt sind Polyurethanpolymere **A** der Formel (I a), bei welchen Y³ für einen Rest der Formel (VII') oder (VIII'), steht, wobei R⁴ in Formel (VII') für einen Kohlenwasserstoffrest mit 12 bis 30 C-Atomen steht, und wobei R⁵ in Formel (VIII') für einen linearen oder verzweigten Alkylrest mit 11 bis 30 C-Atomen steht. Diese bevorzugten Polyurethanpolymere **A** sind geruchsfrei.

Besonders bevorzugt als Polyurethanpolymere **A** sind Polyurethanpolymere **A2** der Formel (I a') oder (I b'), welche eine spezifische Auswahl des bei Raumtemperatur festen, Aldimingruppen aufweisenden Polyurethanpolymers **A** der Formel (I a) oder (I b) darstellen. 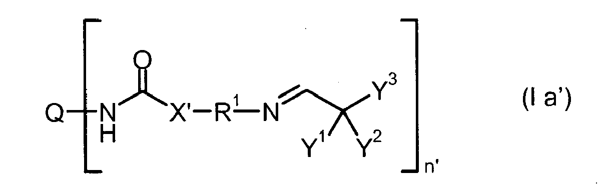 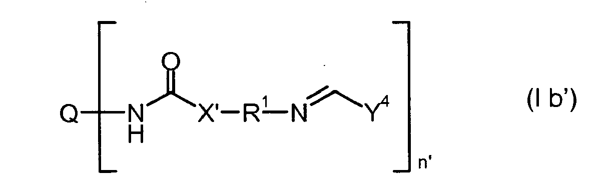 wobei in Formel (I a') und (I b')
n' für 2 oder 3, insbesondere für 2, steht;
X' für O oder für N-R² oder für N-R^{2'} steht, wobei
R² entweder
für eine Alkylgruppe mit 1 bis 4 C-Atomen, insbesondere für Methyl, steht,
oder für -CHR⁷-CH₂R⁸ steht, wobei
R⁷ für ein Wasserstoffatom oder für -COOR⁹ steht und
R⁸ für -COOR⁹ oder für -CONHR⁹ oder für -CONR⁹₂ steht, wobei R⁹ für eine Alkylgruppe mit 1 bis 4 C-Atomen steht,
und Q, R¹, R^{2'}, Y¹, Y², Y³ und Y⁴ die bereits beschriebenen Bedeutungen aufweisen.

Zusammensetzungen enthaltend Polyurethanpolymere **A2** weisen eine besonders gute Lagerstabilität auf.
Als Polyurethanpolymere **A2** besonders bevorzugt sind solche, bei welchen X' für O oder N-R² steht, wobei R² für eine Alkylgruppe mit 1 bis 4 C-Atomen, insbesondere für Methyl, steht. Zusammensetzungen enthaltend diese Polyurethanpolymere **A2** zeigen neben der besonders guten Lagerstabilität einen schnellen Aufbau der Anfangsfestigkeit.

Ein geeignetes Polyurethanpolymer **P2** zur Herstellung eines Polyurethanpolymeren **A** ist erhältlich durch die Umsetzung von mindestens einem Polyol mit mindestens einem Polyisocyanat nach bekannten Verfahren, im Wesentlichen auf dieselbe Weise, wie es bereits für das Polyurethanpolymer **P1** beschrieben wurde.
In einer bevorzugten Ausführungsform wird das Polyurethanpolymer **P2** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 2.5, insbesondere 1.5 bis 2.2.

Als Polyole zur Herstellung eines Polyurethanpolymers **P2** besonders geeignet sind einerseits Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Pimelinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.

Bevorzugt sind bei Raumtemperatur flüssige, amorphe, teilkristalline und kristalline Polyesterdi- und -triole, insbesondere Polyesterdiole. Geeignete bei Raumtemperatur flüssige Polyesterdiole sind nicht weit unterhalb von Raumtemperatur fest, beispielsweise bei Temperaturen zwischen 0 °C und 25 °C und werden stets in Kombination mit mindestens einem amorphen, teilkristallinen oder kristallinen Polyesterpolyol eingesetzt.
Als Polyesterdiole besonders bevorzugt sind Adipinsäure/Hexandiol-Polyester, Azelainsäure/Hexandiol-Polyester und Dodecandicarbonsäure/Hexandiol-Polyester mit einem Schmelzpunkt im Bereich von 40 °C bis 80 °C, insbesondere 50 °C bis 70 °C.
Als Polyole zur Herstellung eines Polyurethanpolymers **P2** besonders geeignet sind andererseits Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind. Insbesondere geeignet sind bei Raumtemperatur flüssige, amorphe, teilkristalline oder kristalline Polycarbonatdiole. Geeignete bei Raumtemperatur flüssige Polcarbonatdiole sind nicht weit unterhalb von Raumtemperatur fest, beispielsweise bei Temperaturen zwischen 0 °C und 25 °C und werden stets in Kombination mit mindestens einem amorphen, teilkristallinen oder kristallinen Polycarbonatpolyol eingesetzt.

Bevorzugt sind Polycarbonatdiole.
Besonders bevorzugt sind Polycarbonatdiole auf der Basis von Hexandiol.

Zur Herstellung eines Polyurethanpolymers **P2** sind dieselben Polyisocyanate geeignet wie zur Herstellung eines Polyurethanpolymers **P1.**
Bevorzugt sind die Diisocyanate, insbesondere MDI, TDI, HDI und IPDI. Besonders bevorzugt ist MDI.

Das Polyurethanpolymer **P2** ist bei Raumtemperatur fest und weist einem Schmelzpunkt im Bereich von 40 °C bis 80 °C, insbesondere im Bereich von 50 °C bis 70 °C, auf.
Das Polyurethanpolymer **P2** weist ein Molekulargewicht von vorzugsweise 500 g/mol oder darüber auf. Insbesondere weist das Polyurethanpolymer **P2** ein Molekulargewicht von 1000 bis 30'000 g/mol, bevorzugt von 2000 bis 10'000 g/mol, auf. Weiterhin weist das Polyurethanpolymer **P2** bevorzugt eine mittlere Funktionalität im Bereich von 1.8 bis 2.2 auf.

Ein zur Umsetzung mit einem Polyurethanpolymer **P2** geeignetes Aldimin **D** der Formel (IV a) oder (IV b) ist erhältlich durch eine Kondensationsreaktion unter Abspaltung von Wasser zwischen einem Amin der Formel (V) und einem Aldehyd der Formel (VIa) oder (VIb). Der Aldehyd wird hierbei in Bezug auf die primären aliphatischen Aminogruppen des Amins der Formel (V) stöchiometrisch oder im stöchiometrischen Überschuss eingesetzt.

HX-R¹-NH₂ (V)

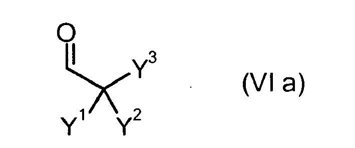

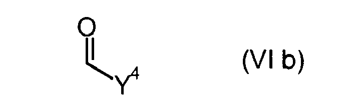

In den Formeln (V), (VI a) und (VI b) weisen X, R¹, Y¹, Y², Y³ und Y⁴ die bereits erwähnten Bedeutungen auf.
Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.
Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Als Amin der Formel (V) geeignet sind in einer ersten Ausführungsform Verbindungen mit einer oder zwei primären aliphatischen und einer sekundären Aminogruppe, wie beispielsweise N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Aminoethyl-piperazin, Diethylentriamin (DETA), Bis-hexamethylentriamin (BHMT); Di- und Triamine aus der Cyanoethylierung oder Cyanobutylierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohexylamino-1-pentylamin, Dipropylentriamin (DPTA), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, , und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind; die Produkte aus der Michael-artigen Addition von aliphatischen primären Di- oder Triaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1.

Als Amin der Formel (V) geeignet sind in einer zweiten Ausführungsform aliphatische Hydroxyamine, wie beispielsweise 2-Aminoethanol, 2-Methylaminoethanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol; eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, Triethylenglykol-monoamin, α-(2-Hydroxymethylethyl)-ω-(2-aminomethylethoxy)-poly(oxy(methyl-1,2-ethandiyl)); eine Hydroxylgruppe und eine primäre Aminogruppe tragende Derivate von polyalkoxylierten drei- oder höherwertigen Alkoholen; Produkte aus der einfachen Cyanoethylierung und anschliessender Hydrierung von Glykolen, beispielsweise 3-(2-Hydroxyethoxy)-propylamin, 3-(2-(2-Hydroxyethoxy)-ethoxy)-propylamin und 3-(6-Hydroxyhexyloxy)-propylamin.

Als Amin der Formel (V) geeignet sind in einer dritten Ausführungsform aliphatische Mercaptoamine, wie beispielsweise 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol, 12-Amino-1-dodecanthiol und Aminothiozucker wie 2-Amino-2-deoxy-6-thioglucose.

Bevorzugte Amine der Formel (V) sind Amine, welche ausgewählt sind aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT und Fettdiamine wie N-Cocoalkyl-1,3-propandiamin, N-Oleyl-1,3-propandiamin, N-Soyaalkyl-1,3-propandiamin und N-Talgalkyl-1,3-propandiamin; Produkte aus der Michael-artigen Addition von aliphatischen primären Diaminen mit Malein- und Fumarsäurediestern, Acryl- und Methacrylsäureestern, Acryl- und Methacrylsäureamiden, bevorzugt mit Maleinsäurediestern, insbesondere Maleinsäuredimethyl-, -diethyl-, -dipropyl- und -dibutylester, und mit Acrylsäureestern, insbesondere Acrylsäuremethylester, umgesetzt im Molverhältnis 1:1; aliphatische Hydroxy- oder Mercaptoamine, in denen die primäre Aminogruppe von der Hydroxyl- oder Mercaptogruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin sowie 3-(6-Hydroxyhexyloxy)-propylamin.
Besonders bevorzugt sind Amine der Formel (V), in welchen X für Sauerstoff oder für N-R² steht, wobei R² für eine Alkylgruppe mit 1 bis 4 C-Atomen insbesondere für Methyl, Ethyl, Propyl oder Butyl, bevorzugt für Methyl, steht. Damit hergestellte Polyurethanpolymere **A** der Formel (I a) oder (I b) haben die Eigenschaft, erfindungsgemässe Zusammensetzungen mit einem schnellen Aufbau der Anfangsfestigkeiten zu ergeben.

Zur Herstellung eines Aldimins **D** der Formel (IV a) oder (IV b) sind Aldehyde der Formel (VIa) oder (VIb) geeignet. Diese Aldehyde haben die Eigenschaft, dass ihre Reste Y¹, Y², Y³ und Y⁴ keine Gruppierungen aufweisen, die in Abwesenheit von Wasser mit Isocyanatgruppen reaktionsfähig sind; insbesondere weisen Y¹, Y², Y³ und Y⁴ keine Hydroxylgruppen, keine primären oder sekundären Aminogruppen, keine Harnstoffgruppen und keine anderen Gruppen mit aktivem Wasserstoff auf.

Zur Herstellung eines Aldimins **D** der Formel (IV a) oder (IV b) sind erstens Aldehyde der Formel (VIa) geeignet, wobei Y¹, Y² und Y³ die bereits genannten Bedeutungen aufweisen.

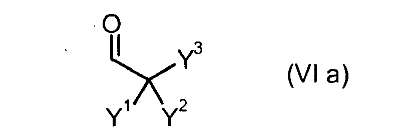

Aldehyde der Formel (VIa) sind tertiäre aliphatische oder tertiäre cycloaliphatische Aldehyde, wie beispielsweise Pivalaldehyd (= 2,2-Dimethylpropanal), 2,2-Dimethyl-butanal, 2,2-Diethyl-butanal, 1-Methyl-cyclopentancarboxaldehyd, 1-Methyl-cyclohexancarboxaldehyd; sowie Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde der Formel (VIa) sind in einer ersten Ausführungsform Aldehyde der Formel (VII) mit einem Rest Y³ der Formel (VII'), 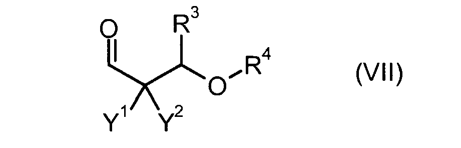 wobei
R³ für ein Wasserstoffatom oder für eine Alkyl- oder Arylalkylgruppe steht,
R⁴ für einen Kohlenwasserstoffrest mit 1 bis 30 C-Atomen, der gegebenenfalls Heteroatome enthält, steht, und
Y¹ und Y² die bereits genannten Bedeutungen aufweisen.
In Formel (VII) stehen Y¹ und Y² jeweils bevorzugt für eine Methylgruppe, und R³ steht bevorzugt für ein Wasserstoffatom.
Aldehyde der Formel (VII) stellen Ether von aliphatischen, araliphatischen oder cycloaliphatischen 2,2-disubstituierten 3-Hydroxyaldehyden mit Alkoholen der Formel HO-R⁴ dar, beispielsweise Fettalkoholen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären araliphatischen oder sekundären cycloaliphatischen Aldehyden, wie beispielsweise 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd.
Als Beispiele solcher Aldehyde der Formel (VII) genannt werden sollen 2,2-Dimethyl-3-(2-ethylhexyloxy)-propanal, 2,2-Dimethyl-3-lauroxy-propanal und 2,2-Dimethyl-3-stearoxy-propanal.

In einer zweiten Ausführungsform sind besonders geeignete Aldehyde der Formel (VIa) Aldehyde der Formel (VIII) mit einem Rest Y³ der Formel (VIII'). 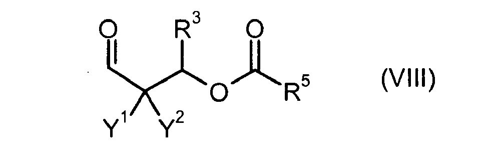 In Formel (VIII) steht
R³ für ein Wasserstoffatom oder für eine Alkyl- oder Arylalkylgruppe,
R⁵ steht
entweder für ein Wasserstoffatom,
oder für einen linearen oder verzweigten Alkylrest mit 1 bis 30 C-Atomen, gegebenenfalls mit cyclischen Anteilen und gegebenenfalls mit mindestens einem Heteroatom,
oder für einen einfach oder mehrfach ungesättigten, linearen oder verzweigten Kohlenwasserstoffrest mit 5 bis 30 C-Atomen,
oder für einen, gegebenenfalls substituierten, aromatischen oder heteroaromatischen 5- oder 6-gliedrigen Ring,
und Y¹ und Y² weisen die bereits genannten Bedeutungen auf.
In Formel (VIII) stehen Y¹ und Y² jeweils bevorzugt für eine Methylgruppe, und R³ steht bevorzugt für ein Wasserstoffatom.

Verbindungen der Formel (VIII) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethylbutanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar.
Beispiele für geeignete Carbonsäuren sind zum einen aliphatische Carbonsäuren, wie Ameisensäure, Essigsäure, Propionsäure, Buttersäure, Isobuttersäure, Valeriansäure, Capronsäure, 2-Ethyl-capronsäure, Caprinsäure, Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche solche Säuren enthalten. Als Carbonsäuren geeignet sind zum anderen aromatische Carbonsäuren, beispielsweise Benzoesäure oder die stellungsisomeren Tolylsäuren, Ethyl- oder Isopropyl- oder tert.-Butyl- oder Methoxy- oder Nitrobenzoesäuren.
Bevorzugte Aldehyde der Formel (VIII) sind 2,2-Dimethyl-3-lauroyloxypropanal, 2,2-Dimethyl-3-myristoyloxypropanal 2,2-Dimethyl-3-palmitoyloxypropanal, 2,2-Dimethyl-3-stearoyloxy-propanal und 2,2-Dimethyl-3-benzoyloxypropanal, sowie analoge Ester anderer 2,2-disubstituierter 3-Hydroxyaldehyde.
In einer besonders bevorzugten Ausführungsform ist R⁵ ausgewählt aus der Gruppe bestehend aus Phenyl und den C₁₁-, C₁₃-, C₁₅- und C₁₇-Alkylgruppen.
Besonders bevorzugt ist 2,2-Dimethyl-3-lauroyloxypropanal.

In einer bevorzugten Herstellmethode eines Aldehyds der Formel (VIII) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

In einer besonders bevorzugten Ausführungsform sind die Aldehyde der Formel (VIa) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.
Geruchsfreie. Aldehyde der Formel (VIa) sind einerseits insbesondere Aldehyde der Formel (VII), in welchen der Rest R⁴ für einen Kohlenwasserstoffrest mit 12 bis 30 C-Atomen, der gegebenenfalls Heteroatome enthält, steht.
Andererseits sind geruchsfreie Aldehyde der Formel (VIa) insbesondere Aldehyde der Formel (VIII), in welchen der Rest R⁵ entweder für eine lineare oder verzweigte Alkylkette mit 11 bis 30 C-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen steht.
Beispiele für geruchsfreie Aldehyde der Formel (VIII) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (VIII) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Zur Herstellung eines Aldimins **D** der Formel (IV a) oder (IV b) sind zweitens Aldehyde der Formel (VI b) geeignet, 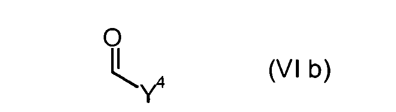 wobei Y⁴
entweder für eine substituierte oder unsubstituierte Aryl- oder Heteroaryl-Gruppe steht, welche eine Ringgrösse zwischen 5 und 8, bevorzugt 6, Atomen aufweist, steht
oder für 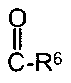 steht, wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht.

Geeignete Aldehyde der Formel (VIb) sind aromatische Aldehyde, wie beispielsweise Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd
Geeignete Aldehyde der Formel (VI b) sind weiterhin Glyoxal, Glyoxalsäureester, beispielsweise Glyoxalsäuremethylester, Zimtaldehyd und substituierte Zimtaldehyde.

Die Polyurethanpolymere **A** der Formel (I a) mit aliphatischen Aldimingruppen und die Polyurethanpolymere **A** der Formel (I b) mit aromatischen Aldimingruppen haben die Eigenschaft, dass ihre Aldimingruppen nicht zu Enamingruppen tautomerisieren können, da sie als Substituenten in α-Stellung zum C-Atom der Aldimingruppe keinen Wasserstoff enthalten. Aufgrund dieser Eigenschaft bilden sie zusammen mit Isocyanatgruppen enthaltenden Polyurethanpolymeren **P1** besonders lagerfähige, das heisst weitgehend viskositätsstabile, Mischungen, auch wenn hochreaktive aromatische Isocyanatgruppen wie diejenigen von TDI und MDI vorhanden sind.

Die Aldimingruppen des Polyurethanpolymers **A** sind in der feuchtigkeitshärtenden Zusammensetzung in einem stark unterstöchiometrischen Verhältnis in Bezug auf die Isocyanatgruppen des Polyurethanpolymers **P1** vorhanden. Typischerweise beträgt das Verhältnis zwischen Aldimin- und Isocyanatgruppen 0.01 bis 0.4, insbesondere 0.03 bis 0.3.
Üblicherweise ist das Polyurethanpolymer **A** in einer Menge von 0.3 - 20 Gewichts-%, bevorzugt in einer Menge von 0.5 - 15 Gewichts-%, besonders bevorzugt in einer Menge von 1 bis 10 Gewichts-%, bezogen auf die gesamte Zusammensetzung, vorhanden.

Vorteilhaft enthält die feuchtigkeitshärtende Zusammensetzung weiterhin mindestens einen Füllstoff **F.** Der Füllstoff **F** beeinflusst beispielsweise sowohl die Konsistenz der nicht ausgehärteten Zusammensetzung als auch die mechanischen Eigenschaften der ausgehärteten Zusammensetzung. Geeignete Füllstoffe **F** sind anorganische und organische Füllstoffe, zum Beispiel natürliche, gemahlene oder gefällte Calciumcarbonate, welche gegebenenfalls mit Fettsäuren, insbesondere Stearaten, beschichtet sind, calcinierte Kaoline, Aluminiumoxide, Aluminiumhydroxide, Baryt (BaSO₄, auch Schwerspat genannt), Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln. Bevorzugte Füllstoffe sind Calciumcarbonate, Kaoline, pyrogene Kieselsäuren und Russ.
Es kann von Vorteil sein, eine Mischung verschiedener Füllstoffe **F** einzusetzen.
Eine geeignete Menge Füllstoff **F** liegt beispielsweise im Bereich von 10 bis 70 Gewichts-%, bevorzugt 20 bis 60 Gewichts-%, bezogen auf die gesamte Zusammensetzung.

Vorteilhaft enthält die Zusammensetzung weiterhin mindestens einen Katalysator **K,** welcher die Reaktion der Isocyanatgruppen und / oder die Hydrolyse der Aldimingruppen beschleunigt.
Katalysatoren **K,** welche die Reaktion der Isocyanatgruppen mit Wasser beschleunigen, sind insbesondere Metallverbindungen, beispielsweise Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid und Dibutylzinnoxid, Zinn(II)-carboxylate, Stannoxane wie Laurylstannoxan, Bismutverbindungen wie Bismut(III)-octoat, Bismut(III)-neodecanoat oder Bismut(III)-oxinate; sowie tertiäre Amine, beispielsweise 2,2'-Dimorpholinodiethylether und andere Morpholinether-Derivate, 1,4-Diazabicyclo[2.2.2]octan und 1,8-Diazabicyclo[5.4.0]undec-7-en.
Katalysatoren **K,** welche die Hydrolyse von Aldimingruppen beschleunigen, sind insbesondere Säuren oder zu Säuren hydrolysierbare Verbindungen, beispielsweise organische Carbonsäuren wie Benzoesäure, Salicylsäure oder 2-Nitrobenzoesäure, organische Carbonsäureanhydride wie Phthalsäureanhydrid oder Hexahydrophthalsäureanhydrid, Silylester von organischen Carbonsäuren, organische Sulfonsäuren wie Methansulfonsäure, p-Toluolsulfonsäure oder 4-Dodecylbenzolsulfonsäure, oder weitere organische oder anorganische Säuren.
Es können auch Kombinationen der genannten Katalysatoren **K** vorhanden sein, insbesondere Mischungen von Säuren und Metallverbindungen, oder von Metallverbindungen und tertiären Aminen, oder von Säuren und tertiären Aminen, oder von Säuren und Metallverbindungen und tertiären Aminen.
Ein typischer Gehalt an Katalysator **K** beträgt üblicherweise 0.005 bis 1 Gewichts-%, bezogen auf die gesamte Zusammensetzung, wobei dem Fachmann klar ist, welche Einsatzmengen für welche Katalysatoren sinnvoll sind.

In der feuchtigkeitshärtenden Zusammensetzung können als weitere Bestandteile unter anderem die folgenden Hilfs- und Zusatzmittel vorhanden sein:
- Weichmacher, beispielsweise Ester organischer Carbonsäuren oder deren Anhydride, zum Beispiel Phthalate wie Dioctylphthalat, Diisononylphtalat oder Diisodecylphthalat, Adipate wie Dioctyladipat, Azelate und Sebacate; organische Phosphor- und Sulfonsäureester und Polybutene;
- Lösemittel;
- Fasern, beispielsweise aus Polyethylen;
- Pigmente, beispielsweise Titandioxid oder Eisenoxide;
- weitere in der Polyurethanchemie übliche Katalysatoren;
- Rheologie-Modifizierer wie beispielsweise Verdickungsmittel oder Thixotropiermittel, zum Beispiel Harnstoffverbindungen, Polyamidwachse, Bentonite oder pyrogene Kieselsäuren;
- Reaktivverdünner oder Vernetzer, beispielsweise Oligomere oder Polymere von Diisocyanaten wie MDI, PMDI, TDI, HDI, 1,12-Dodecamethylendiisocyanat, Cyclohexan-1,3- oder 1,4-diisocyanat, IPDI, Perhydro-2,4'- und - 4,4'-diphenylmethandiisocyanat (H₁₂MDI), 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Diisocyanaten mit kurzkettigen Polyolen, Adipinsäuredihydrazid und andere Dihydrazide, sowie blockierte Härter in Form von Polyaldiminen, Polyketiminen, Oxazolidinen oder Polyoxazolidinen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane, im Folgenden "Silane" genannt, wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere, üblicherweise in einkomponentigen Polyurethanzusammensetzungen eingesetzte Substanzen.

Vorteilhaft enthält die feuchtigkeitshärtende Zusammensetzung mindestens einen Weichmacher.

Es ist vorteilhaft, alle der genannten, in der Zusammensetzung gegebenenfalls enthaltenen Bestandteile, insbesondere einen Füllstoff F, einen Katalysator **K** sowie einen Weichmacher, so auszuwählen, dass die Lagerstabilität der Zusammensetzung durch die Anwesenheit eines solchen Bestandteils nicht beeinträchtigt ist, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Isocyanatgruppen, während der Lagerung nicht in signifikantem Ausmass auftreten. Es ist deshalb insbesondere wichtig, dass die genannten Bestandteile kein oder höchstens Spuren von Wasser enthalten oder beim Lagern freisetzen. Es kann sinnvoll sein, gewisse Bestandteile vor dem Einmischen in die Zusammensetzung chemisch oder physikalisch zu trocknen.

Zur Herstellung der vorgängig beschriebenen Zusammensetzung wird das Polyurethanpolymer **A** bevorzugt im flüssigen Zustand mit dem Polyurethanpolmer **P1** und allfälligen weiteren Bestandteilen der Zusammensetzung vermischt.
Die beschriebene feuchtigkeitshärtende Zusammensetzung wird unter Ausschluss von Feuchtigkeit hergestellt und aufbewahrt. Die Zusammensetzung ist lagerstabil, das heisst sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Wird die feuchtigkeitshärtende Zusammensetzung in Kontakt mit Feuchtigkeit gebracht, beginnt sie, durch chemische Reaktionen der Aldimin- und der Isocyanatgruppen auszuhärten und damit ihre Endfestigkeit zu erlangen. Die Aldimingruppen des Polyurethanpolymers **A** haben die Eigenschaft, bei Kontakt mit Feuchtigkeit zu hydrolysieren. Die dabei formal entstehenden freien Aminogruppen reagieren mit den in der feuchtigkeitshärtenden Zusammensetzung vorhandenen Isocyanatgruppen, wobei Harnstoffgruppen entstehen und Aldehyde der Formel (VIa) oder (VIb) freigesetzt werden. Die im Verhältnis zu den Aldimingruppen überschüssigen Isocyanatgruppen der Zusammensetzung reagieren direkt mit Feuchtigkeit und bilden unter Abspaltung von Kohlendioxid Harnstoffgruppen. Als Ergebnis dieser Reaktionen härtet die Zusammensetzung aus; dieser Prozess wird auch als Vernetzung bezeichnet. Das Polyurethanpolymer **A** wird bei der Aushärtung unter Freisetzung des zu seiner Herstellung eingesetzten Aldehyds in die ausgehärtete Polyurethan-Matrix eingebaut. Die Reaktion der Isocyanatgruppen mit dem hydrolysierenden Polyurethanpolymer **A** muss dabei nicht notwendigerweise über freie Aminogruppen erfolgen. Selbstverständlich sind auch Reaktionen von bei der Hydrolyse auftretenden Zwischenstufen möglich. Beispielsweise ist es denkbar, dass eine hydrolysierende Aldimingruppe des Polyurethanpolymers **A** in der Form einer Halbaminalgruppe direkt mit einer Isocyanatgruppe reagiert.
Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt; sie verlangsamt sich in der Regel mit dem Fortschreiten der Aushärtung.
Werden bei der Aushärtung der feuchtigkeitshärtenden Zusammensetzung nur geruchsfreie Aldehyde, wie die vorgängig beschriebenen, freigesetzt, so entsteht durch die Aushärtung der Zusammensetzung kein störender Geruch, was für viele Anwendungen, insbesondere in Innenräumen, ein grosser Vorteil oder sogar eine Voraussetzung ist.

Wird die vorgängig beschriebene Zusammensetzung warm, das heisst bei einer Temperatur oberhalb des Schmelzpunktes des Polyurethanpolymers **A,** appliziert, erfolgt die Aushärtung durch zwei Vorgänge. Einerseits verfestigt sich die Zusammensetzung beim Abkühlen, indem das Polyurethanpolymer **A** erstarrt, insbesondere durch Kristallisation, und dadurch die Viskosität der Zusammensetzung stark erhöht. Diese physikalische Aushärtung beendet die Offenzeit ab einem gewissen Zeitpunkt und ergibt die Anfangsfestigkeit der Zusammensetzung. Parallel dazu erfolgt die chemische Aushärtung der Zusammensetzung mittels Feuchtigkeit, verbunden mit der Ausbildung der Endfestigkeit, wie bereits beschrieben.

Im vollständig ausgehärteten Zustand verfügt die vorgängig beschriebene Zusammensetzung über elastische Eigenschaften bei einer hohen Festigkeit. Das heisst, sie weist einerseits eine hohe Dehnbarkeit, typischerweise > 300%, ein hohes E-Modul, typischerweise > 5 MPa im Bereich von 0.5 - 5% Dehnung, und eine hohe Zugfestigkeit, typischerweise > 6 MPa, auf. Aufgrund dieser Eigenschaften eignet sich die Zusammensetzung für eine Vielzahl von Anwendungen, insbesondere als elastischer Klebstoff. Insbesondere eignet sie sich für Anwendungen, welche eine gute Anfangsfestigkeit erfordern.

Bevorzugt wird die vorgängig beschriebene Zusammensetzung als Klebstoff eingesetzt, insbesondere als Warmschmelzklebstoff.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; oder das Abdichten von Fugen, Nähten oder Hohlräumen in der industriellen Fertigung oder Reparatur, oder im Hoch- oder Tiefbau.

In der Anwendung als Klebstoff wird die feuchtigkeitshärtende Zusammensetzung zum Verkleben eines Substrates **S1** und eines Substrates **S2** eingesetzt.
Ein solches Verfahren zur Verklebung umfasst die Schritte
i') Applikation der vorgängig beschriebenen Zusammensetzung auf das Substrat **S1;**
ii') Kontaktieren der applizierten Zusammensetzung mit dem Substrat **S2** innerhalb der Offenzeit;
iii') chemisches Vernetzen der Zusammensetzung mit Feuchtigkeit;
wobei das Substrat **S2** aus dem gleichen oder einem unterschiedlichen, Material wie das Substrat **S1** besteht.

Besonders bevorzugt wird die beschriebene Zusammensetzung als Warmschmelzklebstoff eingesetzt, welcher warm appliziert wird.

In der Anwendung als Warmschmelzklebstoff wird die vorgängig beschriebene Zusammensetzung zum Verkleben eines Substrates **S1** und eines Substrates **S2** eingesetzt.
Ein solches Verfahren zur Verklebung umfasst die Schritte
i) Aufheizen der Zusammensetzung auf eine Temperatur über dem Schmelzpunkt des Polyurethanpolymers **A** der Formel (I a) oder (I b), insbesondere zwischen 40 °C und 100 °C;
ii) Applikation der aufgeheizten Zusammensetzung auf das Substrat **S1**;
iii) Kontaktieren der applizierten Zusammensetzung mit dem Substrat **S2** innerhalb der Offenzeit.
Gegebenenfalls kann anschliessend an Schritt iii) ein Schritt iv) des Verschiebens des Substrates **S1** relativ zum Substrat **S2** erfolgen.
An Schritt iii), oder gegebenenfalls an Schritt iv), schliesst sich ein Schritt v) des chemischen Aushärtens der Zusammensetzung mit Feuchtigkeit an. Der Fachmann versteht, dass die Aushärtungsreaktion, in Abhängigkeit von Faktoren wie der verwendeten Zusammensetzung, der Substrate, der Temperatur, der Umgebungsfeuchtigkeit und der Klebegeometrie, bereits während der Verklebung beginnen kann. Der Hauptteil der chemischen Aushärtung findet im Allgemeinen jedoch nach dem Fügeprozess statt.

Das Substrat **S1** kann gleich oder verschieden von Substrat **S2** sein.
Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyethylen, Polypropylen, Polyester, Epoxidharze; beschichtete Substrate wie pulverbeschichtete Metalle oder Legierungen; sowie Farben und Lacke, insbesondere Automobildecklacke.
Bevorzugt ist eines der Substrate **S1** oder **S2** ein Glas oder eine Glaskeramik, insbesondere in Form einer Scheibe. Besonders bevorzugt ist eines der Substrate **S1** oder **S2** eine Fahrzeugscheibe, insbesondere eine Automobilscheibe.
Die Substrate **S1** und/oder **S2** können bei Bedarf vor dem Applizieren der vorgängig beschriebenen Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen oder Behandeln mit Reinigern oder Lösemitteln; oder das Aufbringen eines Haftvermittlers, einer Haftvermittlerlösung oder eines Primers; oder eine Beflammung oder eine Plasmabehandlung, insbesondere eine Luftplasma-Vorbehandlung bei atmosphärischem Umgebungsdruck.

Nach dem Verkleben der Substrate **S1** und **S2** mittels der vorgängig beschriebenen Zusammensetzung wird ein verklebter Artikel erhalten. Ein derartiger Artikel kann ein Bauwerk sein, insbesondere ein Bauwerk des Hoch- oder Tiefbaus, oder er kann ein industrielles Gut oder ein Konsumgut wie beispielsweise ein Fenster, eine Haushaltmaschine oder ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.
Für eine Anwendung der vorgängig beschriebenen Zusammensetzung als Klebstoff für elastische Verklebungen, beispielsweise im Fahrzeugbau, weist die Zusammensetzung bei der Applikationstemperatur vorzugsweise eine pastöse Konsistenz mit strukturviskosen Eigenschaften auf. Ein solcher pastöser Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Für eine Anwendung der Zusammensetzung als Klebstoff für elastische Verklebungen, beispielsweise im Fahrzeugbau, welche eine gute Anfangsfestigkeit erfordern, wird der Klebstoff vor der Applikation durch eine geeignete Methode auf die erforderliche Applikationstemperatur aufgewärmt, beispielsweise auf 40 °C bis 100 °C, beispielsweise mittels ausreichender Lagerung des jeweiligen Klebstoffs in der Verpackung bei der entsprechenden Temperatur, und/oder durch die Verwendung eines beheizbaren Gebindes, und/oder durch Förderung des Klebstoffs durch eine beheizbare Applikationsvorrichtung. In diesem Fall weist der Klebstoff bei der Applikationstemperatur vorzugsweise eine pastöse Konsistenz mit nicht zu hoher Viskosität auf, während die Konsistenz bei Raumtemperatur deutlich fester bis fest ist, abhängig von den Anforderungen an die Anfangsfestigkeit.
Ein Klebstoff weist bei der Applikation bevorzugt eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat und das Applikationsgerät möglichst nicht verschmutzt werden.
Bei der Verwendung der vorgängig beschriebenen Zusammensetzung als Klebstoff für elastische Verklebungen, beispielsweise im Fahrzeugbau, wird die Zusammensetzung bevorzugt in Form einer Raupe mit einer im Wesentlichen runden oder dreieckigen Querschnittsfläche aufgetragen.
Elastische Verklebungen, beispielsweise im Fahrzeugbau, sind beispielsweise das Ankleben von Teilen, wie Kunststoffabdeckungen, Zierleisten, Flansche, Stosstangen, Führerkabinen oder andere Anbauteile, an ein Fahrzeug, oder das Einkleben von Scheiben in ein Fahrzeug. Als Fahrzeuge genannt werden sollen beispielsweise Automobile, Lastkraftwagen, Busse, Schienenfahrzeuge und Schiffe.
Bevorzugt wird die vorgängig beschriebene Zusammensetzung für das Einkleben von Scheiben in ein Fahrzeug, insbesondere in ein Automobil, eingesetzt.

Die Applikation der vorgängig beschriebenen Zusammensetzung erfolgt bevorzugt bei erhöhter Temperatur, insbesondere bei 40 °C bis 100 °C. Sie kann aber auch, je nach Gehalt und Art der Schmelzkomponente in Form eines Polyurethanpolymers **A,** auch bei Raumtemperatur oder tiefer erfolgen. Je nach Art der Zusammensetzung ist es also nicht unbedingt notwendig, die Schmelzkomponente bei der Applikation der Zusammensetzung aufzuschmelzen.

Eine bevorzugte Anwendung der vorgängig beschriebenen Zusammensetzung sind Klebstoffe mit einer guten Anfangsfestigkeit. Ein solcher Klebstoff weist bei Raumtemperatur eine hochpastöse bis feste Konsistenz auf. Zur Applikation wird er auf eine Temperatur von beispielsweise 40 °C bis 100 °C aufgewärmt, wobei die Konsistenz, hervorgerufen hauptsächlich durch das Schmelzen des Polyurethanpolymers **A,** sich so verändert, dass eine pastöse Masse mit niedriger Viskosität entsteht. Nach der Applikation des Klebstoffs kühlt sich dieser auf Umgebungstemperatur, insbesondere Raumtemperatur, ab, wobei die Schmelzkomponente in Form des Polyurethanpolymers **A** allmählich fest wird. Aufgrund dieses Erstarrungsvorgangs weist der Klebstoff eine deutlich erhöhte Viskosität und dadurch eine gute Anfangsfestigkeit auf zu einem Zeitpunkt, an dem die chemische Aushärtung mittels Feuchtigkeit noch nicht wesentlich fortgeschritten ist.
Die Offenzeit eines solchen Klebstoffs ist abhängig von der Geschwindigkeit, mit welcher sich die Viskosität des Klebstoffs beim Abkühlen erhöht. Je höher die Viskosität des Klebstoffs ist, umso mehr Kraft muss aufgewendet werden, um ein Fügeteil so auf den Klebstoff zu pressen, dass eine geeignete Verklebung entsteht. Ein Mass für das Ende der Offenzeit stellt deshalb die Verpresskraft zum jeweiligen Zeitpunkt nach der Applikation dar. Wie hoch die maximale Verpresskraft sein darf, hängt unter anderem vom jeweiligen Fertigungsprozess ab. Bei einer manuellen Verklebung ist die Offenzeit kürzer als bei einer Verklebung mittels eines Roboters, welcher im Allgemeinen wesentlich mehr Kraft zum Einpressen eines Fügeteils aufbringt.
Die Höhe der Anfangsfestigkeit ist abhängig von der Konsistenz des Klebstoffs, nachdem die Schmelzkomponente beim Abkühlen erstarrt ist. Die Anforderungen an die Höhe der Anfangsfestigkeit hängen stark vom konkreten Fertigungsprozess ab. Typischerweise soll beispielsweise eine in eine Karosserie eingeklebte Scheibe ohne mechanische Fixierung durch die Anfangsfestigkeit des Klebstoffs gehalten werden. Das heisst, die gesamte Klebstoffraupe soll das Eigengewicht der Scheibe aufgrund der Anfangsfestigkeit tragen, ohne dass die chemische Aushärtung des Klebstoffs mittels Feuchtigkeit bereits nennenswert eingesetzt hat. Zu diesem Zeitpunkt ist es typischerweise noch möglich, ein geringfügiges Verschieben der Fügeteile gegeneinander vorzunehmen und diese damit in die für die Verklebung gewünschte Stellung zu bringen.

Naturgemäss weist ein Klebstoff mit einer kurzen Offenzeit eine höhere Anfangsfestigkeit auf als ein Klebstoff mit einer längeren Offenzeit.

In einem weiteren Aspekt betrifft die Erfindung ein Verfahren zur Beeinflussung der Offenzeit und Anfangsfestigkeit einer Polyurethanzusammensetzung mittels einer Schmelzkomponente, welche ein Isocyanatgruppen aufweisendes Polyurethanpolymer **P2** der Formel (III) darstellt, dadurch gekennzeichnet, dass das Isocyanatgruppen aufweisende Polyurethanpolymer **P2** der Formel (III) mit einem Aldimin **D** der Formel (IV a) oder (IV b) teilweise oder vollständig umgesetzt wird

Q⁅NCO]ₘ₊ₙ (III)

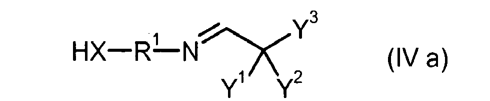

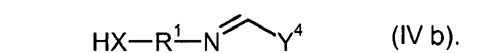

Die Substituenten Q, Y¹, Y², Y³, Y⁴, R¹ und X und die Indizes m und n sind diejenigen des festen Aldimingruppen aufweisenden Polyurethanpolymers **A** der Formel (I a) oder (I b) in der einkomponentigen feuchtigkeitshärtenden Zusammensetzung, wie sie vorgängig beschrieben wurde.

Das bei Raumtemperatur feste, Isocyanatgruppen aufweisende Polyurethanpolymer **P2** der Formel (III) weist einen Schmelzpunkt im Bereich von 40 °C bis 80 °C, insbesondere im Bereich von 50 °C bis 70 °C, auf.

Die Umsetzung der Isocyanatgruppen aufweisenden Schmelzkomponente in Form des Polyurethanpolymers **P2** der Formel (III) mit einem Aldimin **D** der Formel (IV a) oder (IV b) wird vorteilhaft bei einer Temperatur durchgeführt, bei welcher die Schmelzkomponente im flüssigen Zustand vorliegt, gegebenenfalls unter Mitverwendung geeigneter Katalysatoren, wobei das Aldimin **D** in Bezug auf die Isocyanatgruppen der Schmelzkomponente stöchiometrisch, leicht überstöchiometrisch oder unterstöchiometrisch, bevorzugt stöchiometrisch oder leicht überstöchiometrisch, dosiert ist.

Aus solchen Umsetzungen hergestellte, Aldimingruppen aufweisende Schmelzkomponenten führen als Bestandteil einer Warmschmelzklebstoff-Zusammensetzung zu einem veränderten Aushärtungsverhalten, verglichen mit den nicht umgesetzten, Isocyanatgruppen aufweisenden Schmelzkomponenten. Insbesondere wird eine verlängerte Offenzeit erhalten. Die aus den Umsetzungen von Polyurethanpolymeren **P2** mit Aldiminen **D** erhaltenen Polyurethanpolymere **A,** insbesondere die Polyurethanpolymere **A1** oder **A2,** verändern das Aushärtungsverhalten einer Warmschmelzklebstoff-Zusammensetzung in besonders vorteilhafter Weise, indem die Erstarrung der Schmelzkomponente, die insbesondere durch Kristallisation erfolgt, mit leichter bis ausgeprägter Verzögerung eintritt. Dadurch sind Warmschmelzklebstoff-Zusammensetzungen mit einem mit dem Stand der Technik vergleichbaren Schmelzverhalten zugänglich, welche aber eine längere Offenzeit aufweisen. Die verlängerte Offenzeit lässt sich durch die Art und Menge des zur Umsetzung des Polyurethanpolymers **P2** eingesetzten Aldimins **D** in einem breiten Bereich variieren, was für einen Einsatz einer solchen Zusammensetzung als Klebstoff, insbesondere in industriellen Fertigungsprozessen, von grossem Vorteil ist.
Die Offenzeit lässt sich dabei insbesondere durch die Wahl des Aldimins **D** und die Stöchiometrie der Umsetzung steuern. Bei der Verwendung von Aldiminen **D,** bei denen X in Formel (IV a) oder (IV b) für O oder für N-R² steht, wobei R² eine Alkylgruppe mit 1 bis 4 C-Atomen, insbesondere Methyl, darstellt, weist der Warmschmelzklebstoff eine relativ kurze Offenzeit und eine hohe Anfangsfestigkeit auf. Bei der Verwendung von Aldiminen **D,** bei denen X in Formel (IV a) oder (IV b) für N-R² steht, wobei R² entweder für einen einwertigen Kohlenwasserstoffrest mit mehr als 4 C-Atomen, welcher gegebenenfalls mindestens eine Carbonsäureester-, Nitril-, Nitro-, Phosphonsäureester-, Sulfon- oder Sulfonsäureester-Gruppe aufweist, steht, oder für einen Substituenten der Formel (II a) oder (II b) steht; oder bei denen X in Formel (IV a) oder (IV b) für N-R^{2'} steht, wobei R^{2'} die in Formel (I a) oder (I b) bereits genannte Bedeutung hat, weist der Warmschmelzklebstoff eine längere Offenzeit auf.

Das Verfahren macht so Warmschmelzklebstoff-Zusammensetzungen zugänglich, bei welchen die Offenzeit und die Anfangsfestigkeit in einem weiten Bereich einstellbar sind, was für viele Verklebungs-Prozesse von grossem Vorteil ist.

In einem weiteren Aspekt schliesslich betrifft die Erfindung ein bei Raumtemperatur festes, Aldimingruppen aufweisendes Polyurethanpolymer **A2** der Formel (I a') oder (I b') mit einem Schmelzpunkt im Bereich von 40 °C bis 80 °C, 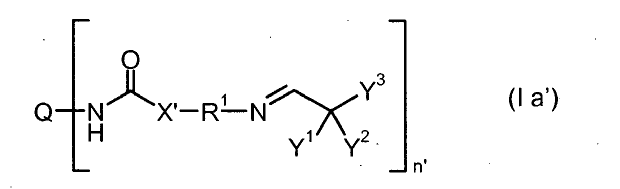 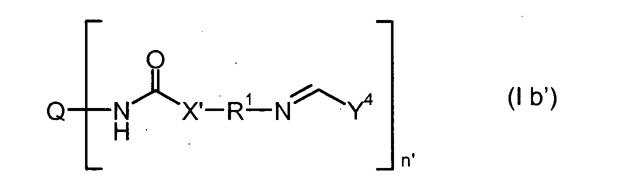 wobei in Formel (I a') und (I b')
n' für 2 oder 3, insbesondere für 2, steht;
Q für den Rest eines bei Raumtemperatur festen Polyurethanpolymers **P2** mit einem Schmelzpunkt im Bereich von 40 °C bis 80 °C nach Entfernung von n' Isocyanatgruppen steht;
Y¹ und Y² entweder unabhängig voneinander jeweils für einen einwertigen Kohlenwasserstoffrest mit 1 bis 12 C-Atomen stehen, oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht;
Y⁴ entweder
für eine substituierte oder unsubstituierte Aryl- oder Heteroaryl-Gruppe, welche eine Ringgrösse zwischen 5 und 8, bevorzugt 6, Atomen aufweist, steht,
oder für 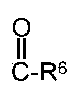 steht, wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht;
R¹ entweder für einen zweiwertigen Kohlenwasserstoffrest mit 2 bis 12 C-Atomen, welcher gegebenenfalls mindestens ein Heteroatom, insbesondere in der Form von Ether-Sauerstoff oder tertiärem Amin-Stickstoff, enthält, steht, oder, falls X' für N-R^{2'} steht, zusammen mit R^{2'} für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht;
X' für O oder für N-R² oder für N-R^{2'} steht;
und wobei
R² entweder
für eine Alkylgruppe mit 1 bis 4 C-Atomen, insbesondere für Methyl, steht,
oder für -CHR⁷-CH₂R⁸ steht, wobei
R⁷ für ein Wasserstoffatom oder für -COOR⁹ steht und
R⁸ für -COOR⁹ oder für -CONHR⁹ oder für -CONR⁹₂ steht, wobei R⁹ für eine Alkylgruppe mit 1 bis 4 C-Atomen steht;
und R^{2'} zusammen mit R¹ für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht.
Bevorzugt wird das Polyurethanpolymer **P2** aus mindestens bei Raumtemperatur flüssigen, amorphen, teilkristallinen der kristallinen Polyesterdiol oder Polycarbonatdiol, und einem Polyisocyanat hergestellt, wobei das bei Raumtemperatur flüssige Polyesterdiol oder Polycarbonatdiol bei einer Temperatur zwischen 0°C und 25°C fest ist, und stets in Kombination mit mindestens einem amorphen, teilkristallinen oder kristallinen Polyesterpolyol und/oder Polycarbonatpolyol eingesetzt wird.

Das Polyurethanpolymer **A2** der Formel (I a') oder (I b') besitzt bevorzugt einen Schmelzpunkt im Bereich von 50 °C bis 70 °C.

Das Polyurethanpolymer **A2** der Formel (I a') oder (I b') wird insbesondere aus einem bei Raumtemperatur festen Polyurethanpolymer **P2** der Formel (III') und einem Aldimin **D** der Formel (IV a') oder (IV b') hergestellt

Q⁅NCO]_{n'} (III')

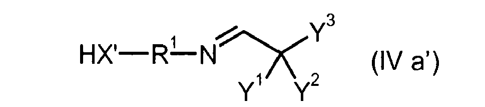

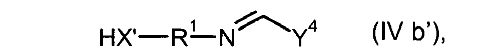

welches seinerseits aus einem Amin der Formel (V') und einem Aldehyd der Formel (VI a) oder (VI b) hergestellt wird.

HX'-R¹-NH₂ (V')

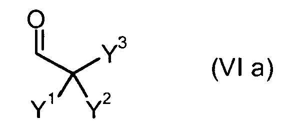

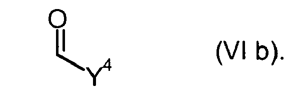

Die Substituenten Q, Y¹, Y², Y³, Y⁴, R¹ und X' und der Index n' haben dieselbe Bedeutung wie in Formel (I a') und Formel (I b') angegeben.

Als Amin der Formel (V') zur Herstellung eines Polyurethanpolymers **A2** der Formel (I a') oder (I b') eignen sich insbesondere Amine, welche ausgewählt sind aus der Gruppe bestehend aus N-Methyl-1,2-ethandiamin, N-Ethyl-1,2-ethandiamin, N-Methyl-1,3-propandiamin, N-Ethyl-1,3-propandiamin, N-Butyl-1,3-propandiamin, 4-Aminomethyl-piperidin, 3-(4-Aminobutyl)-piperidin, sowie Produkte aus der Michael-artigen Addition von aliphatischen primären Diaminen mit Malein- und Fumarsäurediestern, Acryl- und Methacrylsäureestern, Acryl- und Methacrylsäureamiden, bevorzugt mit Maleinsäurediestern, insbesondere Maleinsäuredimethyl-, -diethyl-, -dipropyl- und -dibutylester, und mit Acrylsäureestern, insbesondere Acrylsäuremethylester, umgesetzt im Molverhältnis 1:1; aliphatische Hydroxyamine, in denen die primäre Aminogruppe von der Hydroxygruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin sowie 3-(6-Hydroxyhexyloxy)-propylamin.

Das Polyurethanpolymer **A2** der Formel (I a') oder (I b') hat die besondere Eigenschaft, dass es bei erhöhter Temperatur, insbesondere oberhalb seines Schmelzpunktes, lagerstabil ist und damit während längerer Zeit im flüssigen Zustand gelagert werden kann, ohne sich dabei in seinen Viskositäts-, Schmelz- und Erstarrungseigenschaften bedeutend zu verändern. Es eignet sich insbesondere als Schmelzkomponente in Klebstoffen, Dichtstoffen, Belägen oder Beschichtungen, insbesondere für einkomponentige, feuchtigkeitshärtende Polyurethanzusammensetzungen. Weiterhin eignet es sich als Verdickungsmittel oder als Thixotropiermittel für Klebstoffe, Dichtstoffe, Beläge oder Beschichtungen, welche bei Temperaturen unter dem Schmelzpunkt des Aldimingruppen aufweisenden Polyurethanpolymers **A2** der Formel (I a') oder (I b'), insbesondere unter 40 °C, bevorzugt bei Temperaturen zwischen 0 und 35 °C, appliziert werden, insbesondere für einkomponentige, feuchtigkeitshärtende Polyurethanzusammensetzungen.

Die Lagerfähigkeit einer Schmelzkomponente oder eines Verdickungsmittels oder eines Thixotropiermittel im flüssigen Zustand ist von erheblicher praktischer Bedeutung, da diese in flüssiger Form einfach dosierbar sind und zur Herstellung einer Zusammensetzung nicht zuerst aufgeschmolzen werden müssen, was bei einem batchweisen Herstellprozess mit Aufwand verbunden ist. Andererseits ist eine gute Lagerstabilität einer Schmelzkomponente oder eines Verdickungsmittels oder eines Thixotropiermittel für die Verwendung in einer Zusammensetzung, insbesondere einer Polyurethanzusammensetzung, welche insbesondere als Warmschmelzklebstoff mit guter Anfangsfestigkeit eingesetzt wird, von Bedeutung, weil sich dadurch die Zusammensetzung bei der Lagerung, auch bei erhöhter Temperatur, in ihren Applikations- und Aushärtungseigenschaften nicht oder nur wenig verändert und insbesondere weitgehend konstante, von Herstelldatum und Lagerbedingungen wenig abhängige Werte für die Offenzeit und die Anfangsfestigkeit erhalten werden.

### Beispiele

### Beschreibung der Prüfmethoden

Der totale **Gehalt an Aldiminogruppen und freien Aminogruppen** in den hergestellten Verbindungen (**"Amin-Gehalt"**) wurde titrimetrisch bestimmt (mit 0.1N HClO₄ in Eisessig, gegen Kristallviolett) und ist stets angegeben in mmol NH₂/g (auch wenn es sich nicht nur um primäre Aminogruppen handelt).
Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 s⁻¹) gemessen.
Der **Schmelzpunkt** und der **Kristallisationspunkt** wurden mittels DSC bestimmt, wobei jede Probe zuerst von 0 °C auf 100 °C mit einer Aufheizrate von 2 °C/min aufgeheizt wurde, und anschliessend mit einer Kühlrate von 2 °C/min von 100 °C wieder auf 0 °C abgekühlt wurde. Als Schmelzpunkt wurde jeweils das endotherme Maximum der Aufheizkurve, als Kristallisationspunkt jeweils das exotherme Maximum der Abkühlkurve abgelesen. Zur Bestimmung des Kristallisationspunkts wurden zusätzlich Messungen mit einer höheren Kühlrate von 5 beziehungsweise 10 °C/min durchgeführt, um das Erstarrungsverhalten bei rascherer Abkühlung zu prüfen.
Die **Offenzeit** wurde folgendermassen bestimmt: Der Klebstoff wurde bei 60 °C auf mehrere Polypropylen-Plättchen aufgetragen, jeweils in Form einer Dreiecksraupe von ca. 1 cm Breite. In regelmässigen zeitlichen Abständen wurde jedes Plättchen mit einem zweiten Polypropylenplättchen belegt, dieses unverzüglich auf eine Klebe-Dicke von 5 mm gepresst und mit der zwischen Raupenapplikation und Einpressen des Plättchens vergangenen Zeit beschriftet. Die für das Verpressen notwendige Kraft wurde aufgenommen. Als Offenzeit wurde der Zeitpunkt, an dem die Verpresskraft den Wert von 8 N/cm überstieg, bezeichnet. (In einem industriellen Fertigungsprozess, beispielsweise einer Scheibenverklebung im Automobil, stellt ein Wert von um 8 N/cm für einen typischerweise eingesetzten Roboter die Grenze der zulässigen Verpresskraft dar.)
Die **Anfangsfestigkeit** wurde folgendermassen bestimmt: Auf eine vertikale Fläche wurde in horizontaler Richtung eine Klebstoffraupe bei 60 °C mit einer dreieckigen Querschnittsfläche appliziert, in einer Länge von 100 mm, Breite von 10 mm und Höhe von 12 mm. Nach 30 Sekunden Wartezeit wurde eine Glasplatte mit den Dimensionen 100x40x12 mm soweit auf die Klebstoffraupe gedrückt, dass die Klebstoffschicht eine Dicke von 5 mm aufwies, wobei die Glasplatte so positioniert war, dass ihre Fläche vertikal stand und der Klebstoff entlang der oberen langen Kante lag. Die Glasplatte wurde während 30 Sekunden in Position gehalten und dann losgelassen. Zwei Minuten nach dem Loslassen wurde gemessen, wie weit sich die Glasplatte unter ihrem Eigengewicht nach unten bewegt hatte. Die Belastung, die aufgrund des Eigengewichts der Glasplatte auf die Verklebung wirkte, betrug 3 g/cm. Eine Verschiebung der Glasplatte nach unten von bis zu 0.5 mm wurde als "sehr gut" bezeichnet, eine Verschiebung von > 0.5 mm bis zu 3 mm wurde als "gut" bezeichnet.
Die **Zugfestigkeit**, die **Bruchdehnung** und das **E-Modul** wurden bestimmt nach DIN 53504 (Zuggeschwindigkeit: 200 mm/min) an während 14 Tagen im Normklima (23±1 °C, 50±5% relative Luftfeuchtigkeit) ausgehärteten Filmen mit einer Schichtdicke von 2 mm.
Die **Haftung** der Klebstoffe wurde bestimmt auf Glasplättchen, welche vor Gebrauch mit Sika^{®} Aktivator (erhältlich bei Sika Schweiz AG) vorbehandelt und während 10 Minuten abgelüftet wurden. Der jeweilige Klebstoff wurde bei einer Temperatur von 60 °C in Form einer Raupe auf die so behandelte Glasoberfläche appliziert, und nach zwei Wochen Lagerung bei 23 °C und 50% relativer Feuchtigkeit, geprüft. Dazu wurde die Klebstoffraupe an einem Ende bis knapp an die Glasoberfläche eingeschnitten. Das eingeschnittene Ende der Raupe wurde von Hand festgehalten und dann vorsichtig und langsam, schälend in Richtung des anderen Raupenendes, von der Glasoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Glasoberfläche angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe von der Lackoberfläche gezogen bzw. geschnitten. Die Bewertung der Haftung erfolgte anhand dem nach dem Abziehen der Raupe auf der Glasoberfläche zurückbleibenden ausgehärteten Klebstoff (Kohäsionsbruch), und zwar durch Abschätzen des kohäsiven Anteils der Haftfläche. Betrug der kohäsive Anteil > 95% der Haftfläche, so wurde die Haftung als "sehr gut" bezeichnet.
Zur Bestimmung der **Standfestigkeit** wurde der Klebstoff mittels Kartuschenpistole über eine Dreiecksdüse als waagrecht verlaufende Dreiecksraupe mit einem Basisdurchmesser von 8 mm und einer Höhe (Abstand der Dreiecksspitze von der Basis) von 20 mm auf ein senkrecht stehendes Stück Pappkarton aufgetragen. Nach 5 Minuten wurde gemessen, wie weit sich die Spitze abgesenkt, d.h. von der ursprünglichen Position in der Mitte der Dreiecksraupe wegbewegt, hatte. Bewertung: 1 = Spitze unverändert; 2 = Spitze zwischen Mitte und Basisende; 3 = Spitze auf Höhe des Basisendes; 4 = Spitze tiefer als Basisende; 5 = keine Spitze vorhanden.
Der **Fadenzug** wurde qualitativ bestimmt, indem etwas Klebstoff mittels Kartuschenpistole auf ein an der Wand befestigtes Stück Pappkarton aufgetragen wurde, die Kartuschenpistole beim Auftragsende durch rasches Zurückziehen vom aufgetragenen Klebstoff weggezogen und die Länge des dabei an der Abrissstelle zurückbleibenden Klebstoff-Fadens gemessen wurde. Für die Bewertung wurde folgender Massstab angewendet: Fadenzug kurz = Fadenlänge bis 1 cm; mittel = Fadenlänge bis 2 cm; lang = Fadenlänge grösser als 2 cm.

### a) Herstellung der Aldimine D

### Aldimin D1

In einem Rundkolben wurden unter Stickstoffatmosphäre 28.06 g (0.099 mol) 2,2-Dimethyl-3-lauroyloxy-propanal vorgelegt. Unter kräftigem Rühren wurden aus einem Eintropftrichter innerhalb von 3 Minuten 10.00 g (0.095 mol) 2-(2-Aminoethoxy)-ethanol (Diglycolamine^{®} Agent; Huntsman) zugegeben, wobei die Temperatur des Reaktionsgemisches auf 40°C anstieg. Danach wurden die flüchtigen Bestandteile im Vakuum entfernt (10 mbar, 80°C). Man erhielt 36.3 g einer farblosen, bei Raumtemperatur dünnflüssigen, klaren und geruchlosen Flüssigkeit, die einen Amin-Gehalt von 2.58 mmol NH₂/g aufwies.

### Aldimin D2

In einem Rundkolben wurden unter Stickstoffatmosphäre 30.13 g (0.106 mol) 2,2-Dimethyl-3-lauroyloxy-propanal vorgelegt. Unter kräftigem Rühren wurden aus einem Eintropftrichter innerhalb von 5 Minuten 15.00 g (0.096 mol) N-Cyclohexyl-1,3-propandiamin zugegeben, wobei die Temperatur des Reaktionsgemisches auf 36°C anstieg. Danach wurden die flüchtigen Bestandteile im Vakuum entfernt (10 mbar, 80°C). Man erhielt 43.2 g einer farblosen, bei Raumtemperatur dünnflüssigen, klaren und geruchlosen Flüssigkeit, die einen Amin-Gehalt von 4.39 mmol NH₂/g aufwies.

### Aldimin D3

In einem Rundkolben wurden unter Stickstoffatmosphäre 40.64 g (0.143 mol) 2,2-Dimethyl-3-lauroyloxy-propanal vorgelegt. Unter kräftigem Rühren wurden aus einem Eintropftrichter innerhalb von 5 Minuten 11.68 g (0.133 mol) N-Methyl-1,3-propandiamin zugegeben, wobei die Temperatur des Reaktionsgemisches auf 38°C anstieg. Danach wurden die flüchtigen Bestandteile im Vakuum entfernt (10 mbar, 80°C). Man erhielt 49.8 g einer farblosen, bei Raumtemperatur dünnflüssigen, klaren und geruchlosen Flüssigkeit, die einen Amin-Gehalt von 5.20 mmol NH₂/g aufwies.

### Aldimin D4

In einem Rundkolben wurden unter Stickstoffatmosphäre 34.15 g (0.120 mol) 2,2-Dimethyl-3-lauroyloxy-propanal vorgelegt. Unter kräftigem Rühren wurden aus einem Eintropftrichter innerhalb von 5 Minuten 12.02 g (0.056 mol) Bis-hexamethylentriamin (BHMT-HP; Invista) zugegeben, wobei die Temperatur des Reaktionsgemisches auf 35°C anstieg. Danach wurden die flüchtigen Bestandteile im Vakuum entfernt (10 mbar, 80°C). Man erhielt 43.6 g einer farblosen, bei Raumtemperatur dünnflüssigen, klaren und geruchlosen Flüssigkeit, die einen Amin-Gehalt von 3.68 mmol NH₂/g aufwies.

### Aldimin D5

In einem Rundkolben wurden unter Stickstoffatmosphäre 27.02 g (0.254 mol) 2-(2-Aminoethoxy)-ethanol (Diglycolamine^{®} Agent; Huntsman) vorgelegt. Unter kräftigem Rühren wurden aus einem Eintropftrichter innerhalb von 5 Minuten 27.72 g (0.262 mol) Benzaldehyd zugegeben, wobei die Temperatur des Reaktionsgemisches auf 35 °C anstieg. Danach wurden die flüchtigen Bestandteile im Vakuum entfernt (10 mbar, 80 °C). Man erhielt 50.0 g einer gelblichen, klaren, bei Raumtemperatur dünnflüssigen Flüssigkeit, die einen Amin-Gehalt von 5.13 mmol NH₂/g aufwies.

### b) Herstellung der Polyurethanpolymere P2

### Polymer P2.1

1000 g Polyol Dynacoll^{®} 7360 (Polyester-Diol, OH-Zahl 30 mg KOH/g, Wassergehalt 0.05 Gewichts-%, Schmelzpunkt 55 °C; Degussa) und 139.8 g 4,4'-Methylendiphenyldiisocyanat (MDI; Desmodur^{®} 44 MC L, Bayer) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanatgruppen von 1.9 Gewichts-%.

### Polymer P2.2

1000 g Polyol Dynacoll^{®} 7381 (Polyester-Diol, OH-Zahl 30 mg KOH/g, Wassergehalt 0.05 Gewichts-%, Schmelzpunkt 65 °C; Degussa) 139.8 g 4,4'-Methylendiphenyldiisocyanat (MDI; Desmodur^{®} 44 MC L, Bayer) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanatgruppen von 1.9 Gewichts-%.

### c) Herstellung der Polyurethanpolymere A (Schmelzkomponenten oder Verdickungsmittel)

### Polyurethanpolymer A1.1

Bei einer Temperatur von 60 °C wurden 300 g des Polymers *P2.1* mit 52.6 g Aldimin *D1* homogen vermischt. Das Reaktionsprodukt wurde unter Ausschluss von Feuchtigkeit aufbewahrt. Seine Eigenschaften sind in Tabelle 1 dargestellt.

### Polyurethanpolymer A1.2

Bei einer Temperatur von 60 °C wurden 300 g des Polymers *P2.1* mit 61.8 g Aldimin *D2* homogen vermischt. Das Reaktionsprodukt wurde unter Ausschluss von Feuchtigkeit aufbewahrt. Seine Eigenschaften sind in Tabelle 1 dargestellt.

### Polyurethanpolymer A1.3

Bei einer Temperatur von 60 °C wurden 300 g des Polymers *P2.2* mit 52.6 g Aldimin *D1* homogen vermischt. Das Reaktionsprodukt wurde unter Ausschluss von Feuchtigkeit aufbewahrt. Seine Eigenschaften sind in Tabelle 2 dargestellt.

### Polyurethanpolymer A1.4

Bei einer Temperatur von 60 °C wurden 300 g des Polymers *P2.2* mit 52.2 g Aldimin *D3* homogen vermischt. Das Reaktionsprodukt wurde unter Ausschluss von Feuchtigkeit aufbewahrt. Seine Eigenschaften sind in Tabelle 2 dargestellt.

### Polyurethanpolymer A1.5

Bei einer Temperatur von 60 °C wurden 300 g des Polymers *P2.2* mit 110.6 g Aldimin *D4* homogen vermischt. Das Reaktionsprodukt wurde unter Ausschluss von Feuchtigkeit aufbewahrt. Seine Eigenschaften sind in Tabelle 2 dargestellt.

### Polyurethanpolymer A1.6

Bei einer Temperatur von 60 °C wurden 300 g des Polymers *P2.2* mit 26.5 g Aldimin *D5* homogen vermischt. Das Reaktionsprodukt wurde unter Ausschluss von Feuchtigkeit aufbewahrt. Seine Eigenschaften sind in Tabelle 2 dargestellt.

### d) Eigenschaften der Schmelzkomponenten

### Beispiele 1 bis 8

Die Eigenschaften der Polyurethanpolymere *A1.1, A.1.2, A1.3, A1.4, A1.5* und *A1.6* sowie der Polymere *P2.1* und *P2.2* wurden in Hinblick auf ihre Eignung als Schmelzkomponenten bestimmt. Sie sind in den Tabellen 1 und 2 dargestellt.

**Tabelle 1: Eigenschaften der Schmelzkomponenten der Beispiele 1 und 2 und des Vergleichsbeispiels 3.**

| **Beispiel** | **1** | **2** | **3** |
|---|---|---|---|
| | | | (Vergleich) |
| Schmelzkomponente | *A1.1* | *A1.2* | *P2.1* |

| Viskosität bei 70 °C | | | |
|---|---|---|---|
| frisch | 43 Pa·s | 44 Pa·s | 31 Pa·s |
| gelagert (7 Tage bei 70 °C) | 44 Pa·s | 72 Pa·s | 62 Pa·s |
| relative Zunahme | 2% | 64% | 100% |
| Schmelzpunkt | 52.3 °C | 53.7 °C | 52.6 °C |

| Kristallisationspunkt | | | |
|---|---|---|---|
| Abkühlrate 2 °C/Minute | 31.5 °C | 31.0 °C | 37.6 °C |
| Abkühlrate 5 °C/Minute | 26.0 °C | 25.7 °C | 34.9 °C |
| Abkühlrate 10 °C/Minute | 21.3 °C | 20.7 °C | 30.7 °C |

**Tabelle 2: Eigenschaften der Schmelzkomponenten der Beispiele 4, 5, 6 und 7 und des Vergleichsbeispiels 8. n.b. = nicht bestimmt**

| **Beispiel** | **4** | **5** | **6** | **7** | **8** |
|---|---|---|---|---|---|
| | | | | | (Vergl.) |
| Schmelzkomponente | *A1.3* | *A1.4* | *A1.5* | *A1.6* | *P2.2* |

| Viskosität bei 70 °C | | | | | |
|---|---|---|---|---|---|
| frisch | 44 Pa·s | 67 Pa·s | n.b. | n.b. | 49 Pa·s |
| gelagert (7 Tage bei 70 °C) | 54 Pa·s | 79 Pa·s | n.b. | n.b. | 95 Pa·s |
| relative Zunahme | 22% | 19% | | | 94% |
| Schmelzpunkt | 61.2 °C | 62.7 °C | 57.3 °C | 62.5 °C | 59.3 °C |

| Kristallisationspunkt | | | | | |
|---|---|---|---|---|---|
| Abkühlrate 2 °C/Minute | 42.8 °C | 43.3 °C | 38.7 °C | 43.9 °C | 44.4 °C |
| Abkühlrate 5 °C/Minute | 39.6 °C | 39.9 °C | 33.6 °C | 40.3 °C | 42.3 °C |
| Abkühlrate 10 °C/Minute | 36.6 °C | 36.8 °C | 30.0 °C | 37.0 °C | 39.2 °C |

Aus den Tabellen 1 und 2 ist ersichtlich, dass die erfindungsgemässen Schmelzkomponenten in Form der Polyurethanpolymere *A1.1, A1.2, A1.3* und *A1.4* bei der Lagerung im flüssigen Zustand bei einer Temperatur von 70 °C einen geringeren Anstieg der Viskosität aufweisen als die Schmelzkomponenten in Form der Polymere *P2.1* und *P2.2.* Einen besonders tiefen Anstieg der Viskosität zeigen die erfindungsgemässen Polyurethanpolymere der Beispiele 1, 4 und 5, welche Umsetzungsprodukte von Aldiminen **D** der Formel (IV a) oder (IV b), bzw. (IV a') oder (IV b'), darstellen, in welchen X, bzw. X', für Sauerstoff oder für N-CH₃ steht.
Aus den Tabellen 1 und 2 ist weiterhin ersichtlich, dass die Schmelzpunkte der Beispiele 1 und 2, beziehungsweise der Beispiele 4, 5, 6 und 7, sehr nahe bei den Schmelzpunkten des Vergleichsbeispiels 3, beziehungsweise des Vergleichsbeispiels 8, liegen. Das Schmelzverhalten der Polymere *P2.1* und *P2.2* hat sich also durch die Umsetzung mit den Aldiminen **D** nicht wesentlich verändert.
Schliesslich geht aus den Tabellen 1 und 2 hervor, dass die Kristallisation der erfindungsgemässen Schmelzkomponenten gegenüber jener der Schmelzkomponenten nach den Vergleichsbeispielen, welche nicht mit Aldiminen **D** umgesetzt wurden, langsamer, beziehungsweise verzögert, einsetzt. Die Kristallisationspunkte der Beispiele 1 und 2, beziehungsweise 4, 5, 6 und 7, liegen deutlich tiefer als jene der Vergleichsbeispiele 3, beziehungsweise 8. Dies wird besonders deutlich, wenn die DSC-Messung mit raschen Abkühlraten (5 beziehungsweise 10 °C/Minute) durchgeführt wird.
Daraus lässt sich ableiten, dass die Kristallisation der erfindungsgemässen Schmelzkomponenten, wenn sie als Bestandteil eines Klebstoffes in einem Fertigungsprozess mit einer Applikationstemperatur von 40 bis 80 °C und einer Umgebungstemperatur von Raumtemperatur eingesetzt werden, langsamer beziehungsweise verzögert einsetzt im Vergleich mit den Schmelzkomponenten der Vergleichsbeispiele.

### e) Herstellung eines Polyurethanpolymers P1

### Polymer P1.1

1295 g Polyol Acdaim^{®} 4200 N (low monol Polyoxypropylen-Diol, OH-Zahl 28.5 mg KOH/g; Bayer), 2585 g Polyol Caradol^{®} MD34-02 (Polyoxypropylenpolyoxyethylen-Triol, OH-Zahl 35.0 mg KOH/g; Shell), 620 g 4,4'-Methylendiphenyldiisocyanat (MDI; Desmodur^{®} 44 MC L, Bayer) und 500 g Diisodecylphthalat (DIDP; Palatinol^{®} Z, BASF) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanatgruppen von 2.03 Gewichts-%.

### f) Herstellung einer Harnstoff-Verdicker-Paste

In einem Vakuummischer wurden 1000 g Diisodecylphthalat (Palatinol^{®} Z, BASF) und 160 g 4,4'-Methylendiphenyldiisocyanat (MDI; Desmodur^{®} 44 MC L, Bayer) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt, dann abgekühlt und anschliessend weiterverwendet.

### g) Herstellung von Klebstoff-Grundmassen

### Klebstoff-Grundmasse 1

In einem Vakuummischer wurden 3650 g Polymer *P1.1*, 20 g p-Toluylsulfonylisocyanat (Zusatzmittel TI^{®}, Bayer), 1330 g Diisodecylphtalat (DIDP; Palatinol^{®} Z, BASF), 1000 g Harnstoff-Verdicker-Paste, 2000 g Russ, 1700 g calciniertes Kaolin und 1.3 g Dibutylzinndilaurat unter Feuchtigkeitsausschluss zu einer knollenfreien, homogenen Paste verarbeitet, welche unter Ausschluss von Feuchtigkeit aufbewahrt wurde.

### Klebstoff-Grundmasse 2

In einem Vakuummischer wurden 2000 g Polymer *P1.1*, 20 g p-Toluylsulfonylisocyanat (Zusatzmittel TI^{®}, Bayer), 1000 g Diisodecylphtalat (DIDP; Palatinol^{®} Z, BASF), 900 g Russ, 900 g calciniertes Kaolin, 8 g 2,2'-Dimorpholinodiethylether und 0.4 g Dibutylzinndilaurat unter Feuchtigkeitsausschluss zu einer knollenfreien, homogenen Paste verarbeitet, welche unter Ausschluss von Feuchtigkeit aufbewahrt wurde.

### h) Herstellung von Klebstoffen

### Beispiele 9 bis 15

Gemäss den Mengenangaben in Tabelle 3 wurde die jeweilige Schmelzkomponente in Form eines Polyurethanpolymers *A* für die erfindungsgemässen Klebstoffe der Beispiele 9, 10, 12, 13 und 14, oder in Form eines Polyurethanpolymers *P2* für die Klebstoffe der Vergleichsbeispiele 11 und 15, im flüssigen Zustand unter Ausschluss von Feuchtigkeit homogen in die Klebstoff-Grundmasse 1 eingearbeitet. Die so erhaltenen Klebstoffe wurden bei Raumtemperatur unter Ausschluss von Feuchtigkeit in Kartuschen aufbewahrt.
Die Eigenschaften der Beispiele 9 bis 15 sind in der Tabelle 4 dargestellt. Die Applikation der Klebstoffe erfolgte bei einer Umgebungstemperatur von 25°C und bei einer Klebstofftemperatur von 60 °C.

**Tabelle 3: Zusammensetzung der Klebstoffe der Beispiele 9, 10, 12, 13 und 14 und der Vergleichsbeispiele 11 und 15 in Gewichtsteilen.**

| **Beispiel** | **9** | **10** | **11** | **12** | **13** | **14** | **15** |
|---|---|---|---|---|---|---|---|
| | | | (Vgl.) | | | | (Vgl.) |
| Klebstoff-Grundmasse *1* | 97.0 | 97.0 | 97.0 | 97.0 | 97.0 | 97.0 | 97.0 |
| Polyurethanpolymer *A1.1* | 2.5 | - | - | - | - | - | - |
| Polyurethanpolymer *A1.2* | - | 2.6 | - | - | - | - | - |
| Polyurethanpolymer *A1.3* | - | - | - | 2.5 | - | - | - |
| Polyurethanpolymer *A1.4* | - | - | - | - | 2.4 | - | - |
| Polyurethanpolymer *A1.5* | - | - | - | - | - | 2.6 | - |
| Polymer *P2.1* | - | - | 2.1 | - | - | - | - |
| Polymer *P2.2* | - | - | - | - | - | - | 2.1 |

**Tabelle 4: Eigenschaften der Klebstoffe der Beispiele 9, 10, 12,13 und 14 und der Vergleichsbeispiele 11 und 15. ^{a} bei 0.5-5.0% Dehnung.**

| **Beispiel** | **9** | **10** | **11** | **12** | **13** | **14** | **15** |
|---|---|---|---|---|---|---|---|
| | | | (Vgl.) | | | | (Vgl.) |
| Offenzeit [min] | 37 | 45 | 17 | 10 | 8 | 28 | 4 |
| Anfangsfestigkeit | gut | gut | gut | sehr gut | sehr gut | gut | sehr gut |
| Zugfestigkeit [MPa] | 8.5 | 8.3 | 8.1 | 8.1 | 8.3 | 8.6 | 8.5 |
| Bruchdehnung [%] | 535 | 540 | 490 | 500 | 530 | 510 | 540 |
| E-Modul [MPa]^{a} | 7.3 | 8.0 | 7.4 | 7.7 | 8.4 | 8.4 | 8.6 |
| Haftung | sehr gut | sehr gut | sehr gut | sehr gut | sehr gut | sehr gut | sehr gut |

Aus der Tabelle 4 ist ersichtlich, dass alle Klebstoffe eine gute Anfangsfestigkeit, gute mechanische Eigenschaften und eine gute Haftung aufweisen. Die Offenzeit der erfindungsgemässen Klebstoffe der Beispiele 9, 10 beziehungsweise 12, 13 und 14 ist deutlich länger als jene der Klebstoffe der Vergleichsbeispiele 11, beziehungsweise 15.

### Beispiele 16 bis 18

Gemäss den Mengenangaben in Tabelle 5 wurde das jeweilige Verdickungsmittel im flüssigen Zustand unter Ausschluss von Feuchtigkeit homogen in die Klebstoff-Grundmasse 2 eingearbeitet. Die so erhaltenen Klebstoffe wurden bei Raumtemperatur unter Ausschluss von Feuchtigkeit in Kartuschen aufbewahrt.
Die Eigenschaften der Beispiele 16 bis 18 sind in der Tabelle 5 dargestellt. Die Applikation der Klebstoffe erfolgte bei einer Umgebungstemperatur von 25°C und bei einer Klebstofftemperatur von 25 °C.

**Tabelle 5: Zusammensetzung (in Gewichtsteilen) und Eigenschaften der Klebstoffe der Beispiele 16 und 17 und des Vergleichsbeispiels 18.**

| **Beispiel** | **16** | **17** | **18** |
|---|---|---|---|
| | | | (Vergleich) |
| Klebstoff-Grundmasse *2* | 96.0 | 96.0 | 100.0 |
| Polyurethanpolymer *A1.3* | 4.0 | - | - |
| Polyurethanpolymer *A1.4* | - | 4.0 | - |
| Standfestigkeit | 1 | 1 | 3-4 |
| Fadenzug | kurz | kurz | lang |

Aus der Tabelle 5 ist ersichtlich, dass die beiden Klebstoffe der Beispiele 16 und 17, welche jeweils ein Polyurethanpolymer **A2** als Verdickungsmittel enthalten, gute Applikationseigenschaften in Form einer sehr guten Standfestigkeit und eines kurzen Fadenzugs aufweisen. Der Klebstoff des Vergleichsbeispiels 18, welcher kein Polyurethanpolymer *A* enthält, weist demgegenüber eine deutlich geringere Standfestigkeit und einen längeren Fadenzug auf.

## Patentansprüche

1. Einkomponentige feuchtigkeitshärtende Zusammensetzung umfassend
a) mindestens ein bei Raumtemperatur flüssiges, Isocyanatgruppen aufweisendes Polyurethanpolymer **P1**, und
b) mindestens ein bei Raumtemperatur festes, Aldimingruppen aufweisendes Polyurethanpolymer **A** der Formel (I a) oder (I b) mit einem Schmelzpunkt im Bereich von 40 °C bis 80 °C 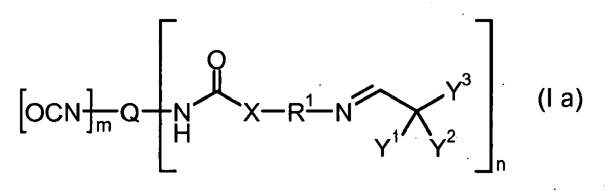 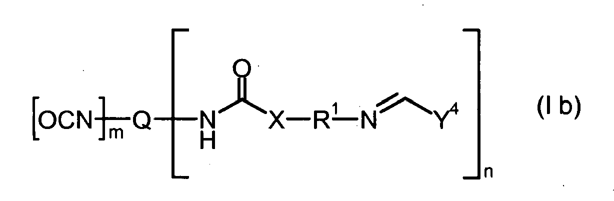
wobei Q für den Rest eines bei Raumtemperatur festen Polyurethanpolymers **P2** mit einem Schmelzpunkt im Bereich von 40 °C bis 80 °C nach Entfernung von m+n Isocyanatgruppen steht; Y¹ und Y² unabhängig voneinander
entweder jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht;
Y⁴ entweder
für eine substituierte oder unsubstituierte Aryl- oder Heteroaryl-Gruppe, welche eine Ringgrösse zwischen 5 und 8, bevorzugt 6, Atomen aufweist, steht,
oder für 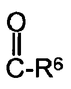 steht,
wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht;
R¹ entweder
für einen zweiwertigen Kohlenwasserstoffrest mit 2 bis 12 C-Atomen, welcher gegebenenfalls mindestens ein Heteroatom, insbesondere in der Form von Ether-Sauerstoff oder tertiärem Amin-Stickstoff, enthält, steht,
oder, falls X für N-R^{2'} steht, zusammen mit R^{2'} für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält steht;
X für O oder für S oder für N-R² oder für N-R^{2'} steht,
wobei R² entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht;
oder für einen Substituenten der Formel (II a) oder (II b) steht, 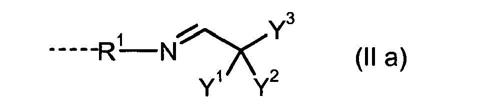 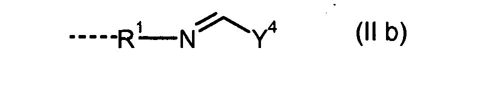 und R^{2'} zusammen mit R¹ für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht;
und n für 1 oder 2 oder 3 steht, m für 0 oder 1 oder 2 steht, mit der Massgabe, dass m+n für 2 oder 3 steht.

2. Einkomponentige feuchtigkeitshärtende Zusammensetzung gemäss Anspruch 1, **dadurch gekennzeichnet, dass** das Polyurethanpolymer **P1** in einer Menge von 10-80 Gewichts-%, insbesondere von 15 - 50 Gewichts-%, bezogen auf das Gewicht der feuchtigkeitshärtenden Zusammensetzung, vorhanden ist.

3. Einkomponentige feuchtigkeitshärtende Zusammensetzung gemäss einem der vorhergehenden Ansprüche, **dadurch gekennzeichnet, dass** das Polyurethanpolymer **A** aus einem bei Raumtemperatur festen, Isocyanatgruppen aufweisenden Polyurethanpolymer **P2** der Formel (III) und einem Aldimin **D** der Formel (IV a) oder (IV b) hergestellt wird
Q⁅NCO]ₘ₊ₙ (III)

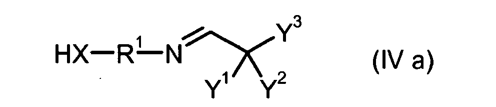

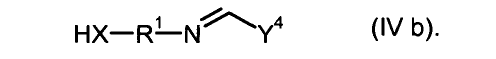

4. Einkomponentige feuchtigkeitshärtende Zusammensetzung gemäss einem der vorhergehenden Ansprüche, **dadurch gekennzeichnet, dass** Y³ für einen Rest der Formel (VII') oder (VIII') steht. 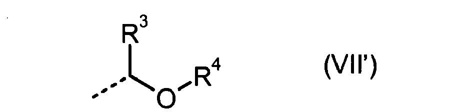 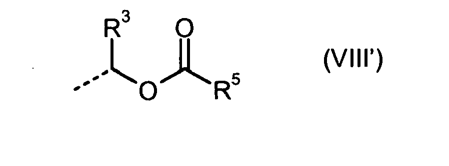 wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 12 bis 30, C-Atomen, der gegebenenfalls Heteroatome enthält, steht; und R⁵ entweder
für ein Wasserstoffatom steht,
oder für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder für einen einfach oder mehrfach ungesättigten, linearen oder verzweigten Kohlenwasserstoffrest mit 5 bis 30 C-Atomen steht,
oder für einen, gegebenenfalls substituierten, aromatischen oder heteroaromatischen 5- oder 6-gliedrigen Ring steht.

5. Ausgehärtete einkomponentige feuchtigkeitshärtende Zusammensetzung gemäss einem der Ansprüche 1-4, **dadurch gekennzeichnet, dass** die feuchtigkeitshärtende Zusammensetzung mit Feuchtigkeit, insbesondere in der Form von Luftfeuchtigkeit oder von einer der Zusammensetzung zugesetzten Wasser enthaltenden Komponente, vernetzt wurde.

6. Verfahren zur Verklebung von einem Substrat **S1** mit einem Substrat **S2** umfassend die Schritte
i) Aufheizen einer einkomponentigen feuchtigkeitshärtenden Zusammensetzung gemäss einem der Ansprüche 1 bis 4 auf eine Temperatur über dem Schmelzpunkt des Polyurethanpolymers **A** der Formel (I a) oder (I b), insbesondere zwischen 40 °C und 100 °C;
ii) Applikation der aufgeheizten feuchtigkeitshärtenden Zusammensetzung auf das Substrat **S1**;
iii) Kontaktieren der applizierten feuchtigkeitshärtenden Zusammensetzung mit dem Substrat **S2** innerhalb der Offenzeit;
wobei das Substrat **S2** aus dem gleichen oder einem unterschiedlichen Material wie das Substrat **S1** besteht.

7. Verfahren zur Verklebung von einem Substrat **S1** mit einem Substrat **S2** umfassend die Schritte
i') Applikation einer einkomponentigen feuchtigkeitshärtenden Zusammensetzung gemäss einem der Ansprüche 1 bis 4 auf das Substrat **S1**;
ii') Kontaktieren der applizierten Zusammensetzung mit dem Substrat **S2** innerhalb der Offenzeit;
iii') chemisches Vernetzen der Zusammensetzung mit Feuchtigkeit;
wobei das Substrat **S2** aus dem gleichen oder einem unterschiedlichen Material wie das Substrat **S1** besteht.

8. Verwendung einer einkomponentigen feuchtigkeitshärtenden Zusammensetzung gemäss einem der Ansprüche 1 bis 4, insbesondere unter Verwendung eines Verfahrens gemäss Anspruch 7, zum Einkleben von Scheiben in ein Fahrzeug, insbesondere in ein Automobil.

9. Verfahren zur Beeinflussung der Offenzeit und Anfangsfestigkeit einer Polyurethanzusammensetzung mittels einer Schmelzkomponente, welche ein Isocyanatgruppen aufweisendes Polyurethanpolymer **P2** der Formel (III) darstellt, **dadurch gekennzeichnet, dass** das Isocyanatgruppen aufweisende Polyurethanpolymer **P2** der Formel (III) mit einem Aldimin **D** der Formel (IV a) oder (IV b) teilweise oder vollständig umgesetzt wird
Q⁅NCO]ₘ₊ₙ (III) 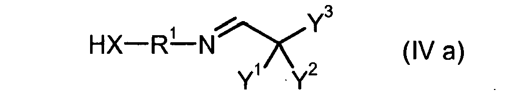 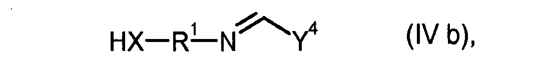
wobei Q für den Rest eines bei Raumtemperatur festen Polyurethanpolymers **P2** mit einem Schmelzpunkt im Bereich von 40 °C bis 80 °C nach Entfernung von m+n Isocyanatgruppen steht; Y¹ und Y² unabhängig voneinander
entweder jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht;
Y⁴ entweder
für eine substituierte oder unsubstituierte Aryl- oder Heteroaryl-Gruppe, welche eine Ringgrösse zwischen 5 und 8, bevorzugt 6, Atomen aufweist, steht,
oder für 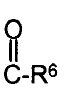 steht,
wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht;
R¹ entweder
für einen zweiwertigen Kohlenwasserstoffrest mit 2 bis 12 C-Atomen, welcher gegebenenfalls mindestens ein Heteroatom, insbesondere in der Form von Ether-Sauerstoff oder tertiärem Amin-Stickstoff, enthält, steht,
oder, falls X für N-R^{2'} steht, zusammen mit R^{2'} für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält steht;
X für O oder für S oder für N-R² oder für N-R²' steht,
wobei R² entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureester-Gruppe aufweist, steht;
oder für einen Substituenten der Formel (II a) oder (II b) steht, 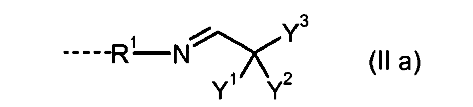 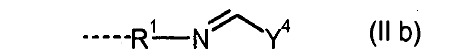 und R^{2'} zusammen mit R¹ für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht;
und n für 1 oder 2 oder 3 steht, m für 0 oder 1 oder 2 steht, mit der Massgabe, dass m+n für 2 oder 3 steht.

10. Aldimingruppen aufweisendes Polyurethanpolymer **A2** der Formel (I a') oder (I b'), welches bei Raumtemperatur fest ist und einen Schmelzpunkt im Bereich von 40 °C bis 80 °C aufweist 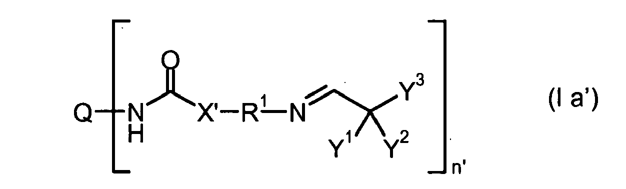 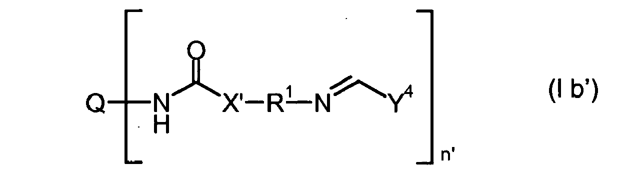 wobei Q für den Rest eines bei Raumtemperatur festen Polyurethanpolymers **P2** mit einem Schmelzpunkt im Bereich von 40 °C bis 80 °C nach Entfernung von n' Isocyanatgruppen steht;
Y¹ und Y² unabhängig voneinander
entweder jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; Y⁴ entweder
für eine substituierte oder unsubstituierte Aryl- oder Heteroaryl-Gruppe, welche eine Ringgrösse zwischen 5 und 8, bevorzugt 6, Atomen aufweist, steht,
oder für 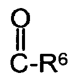 steht,
wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht;
R¹ entweder
für einen zweiwertigen Kohlenwasserstoffrest mit 2 bis 12 C-Atomen, welcher gegebenenfalls mindestens ein Heteroatom, insbesondere in der Form von Ether-Sauerstoff oder tertiärem Amin-Stickstoff, enthält, steht,
oder, falls X' für N-R^{2'} steht, zusammen mit R^{2'} für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht;
X' für O oder für N-R² oder für N-R^{2'} steht,
wobei R² entweder
für eine Alkylgruppe mit 1 bis 4 C-Atomen, insbesondere für Methyl, steht;
oder für -CHR⁷-CH₂R⁸ steht,
wobei R⁷ für ein Wasserstoffatom oder für -COOR⁹ steht und R⁸ für ein Wasserstoffatom oder für -COOR⁹ oder --CONHR⁹ oder -CONR⁹₂ steht,
wobei R⁹ für eine Alkylgruppe mit 1 bis 4 C-Atomen, steht;
und R^{2'} zusammen mit R¹ für einen dreiwertigen Kohlenwasserstoffrest mit 4 bis 12 C-Atomen, welcher gegebenenfalls mindestens ein Heteroatom, insbesondere in der Form von Ether-Sauerstoff oder tertiärem Amin-Stickstoff, enthält, steht;
und n' für 2 oder 3, bevorzugt für 2, steht.

11. Aldimingruppen aufweisendes Polyurethanpolymer **A2** gemäss Anspruch 10, **dadurch gekennzeichnet, dass** das Polyurethanpolymer **P2** aus mindestens bei Raumtemperatur flüssigen, amorphen, teilkristallinen der kristallinen Polyesterdiol oder Polycarbonatdiol, und einem Polyisocyanat hergestellt wird, wobei das bei Raumtemperatur flüssige Polyesterdiol oder Polycarbonatdiol bei einer Temperatur zwischen 0 °C und 25 °C fest ist, und stets in Kombination mit mindestens einem amorphen, teilkristallinen oder kristallinen Polyesterpolyol und/oder Polycarbonatpolyol eingesetzt wird.

12. Aldimingruppen aufweisendes Polyurethanpolymer gemäss Anspruch 10 oder 11, **dadurch gekennzeichnet, dass** es aus einem bei Raumtemperatur festen Polyurethanpolymer **P2** der Formel (III') und einem Aldimin **D** der Formel (IV a') oder (IV b') hergestellt wird,
Q⁅NCO]_{n'} (III') 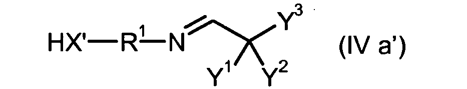 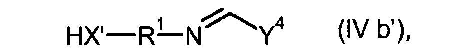
welches seinerseits aus einem Amin der Formel (V') und einem Aldehyd der Formel (VI a) oder (VI b) hergestellt wird
HX'-R¹-NH₂ (V')

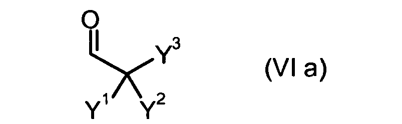

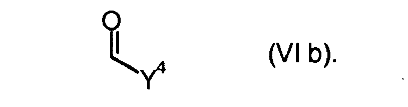

13. Aldimingruppen aufweisendes Polyurethanpolymer gemäss Anspruch 12, **dadurch gekennzeichnet, dass** das Amin der Formel (V') ausgewählt ist aus der Gruppe bestehend aus N-Methyl-1,2-ethandiamin, N-Ethyl-1,2-ethandiamin, N-Methyl-1,3-propandiamin, N-Ethyl-1,3-propandiamin, N-Butyl-1,3-propandiamin, 4-Aminomethyl-piperidin, 3-(4-Aminobutyl)-piperidin, sowie Produkte aus der Michael-artigen Addition von aliphatischen primären Diaminen mit Malein- und Fumarsäurediestern, Acryl- und Methacrylsäureestern, Acryl- und Methacrylsäureamiden, bevorzugt mit Maleinsäurediestern, insbesondere Maleinsäuredimethyl-, - diethyl-, -dipropyl- und -dibutylester, und mit Acrylsäureestern, insbesondere Acrylsäuremethylester, umgesetzt im Molverhältnis 1:1; aliphatische Hydroxyamine, in denen die primäre Aminogruppe von der Hydroxygruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin sowie 3-(6-Hydroxyhexyloxy)-propylamin.

14. Verwendung des Aldimingruppen aufweisenden Polyurethanpolymers gemäss einem der Ansprüche 10 bis 13 als Schmelzkomponente in Klebstoffen, Dichtstoffen, Belägen oder Beschichtungen.

15. Verwendung des Aldimingruppen aufweisenden Polyurethanpolymers gemäss einem der Ansprüche 10 bis 13 als Verdickungsmittel oder als Thixotropiermittel für Klebstoffe, Dichtstoffe, Beläge oder Beschichtungen, welche bei Temperaturen unter dem Schmelzpunkt des Aldimingruppen aufweisenden Polyurethanpolymers **A2**, insbesondere unter 40 °C, bevorzugt bei Temperaturen zwischen 0 °C und 35 °C, appliziert werden.

## Claims

1. A one-component, moisture-curing composition comprising
a) at least one polyurethane polymer **P1** which is liquid at room temperature and contains isocyanate groups, and
b) at least one polyurethane polymer **A** which is solid at room temperature, contains aldimine groups, is of the formula (I a) or (I b), and has a melting point in the range from 40°C to 80°C 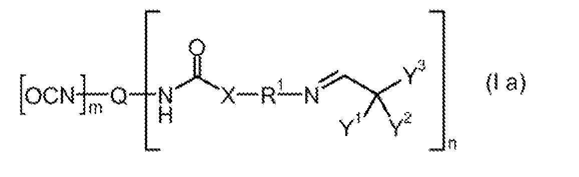 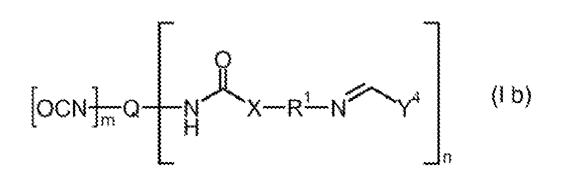
where Q is the radical of a polyurethane polymer **P2**, which is solid at room temperature and has a melting point in the range from 40°C to 80°C, after removal of m+n isocyanate groups;
Y¹ and Y² independently of one another
either are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which optionally contains at least one heteroatom, more particularly oxygen in the form of ether, carbonyl or ester groups;
Y⁴ alternatively
is a substituted or unsubstituted aryl or heteroaryl group which has a ring size of between 5 and 8, preferably 6, atoms, or is 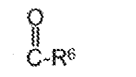 where R⁶ is a hydrogen atom or is an alkoxy group,
or is a substituted or unsubstituted alkenyl or arylalkenyl group having at least 6 C atoms;
R¹ either
is a divalent hydrocarbon radical having 2 to 12 C atoms which optionally contains at least one heteroatom, more particularly in the form of ether oxygen or tertiary amine nitrogen,
or, if X is N-R^{2'}, is together with R^{2'} a trivalent hydrocarbon radical having 4 to 12 C atoms which optionally contains at least one heteroatom, more particularly in the form of ether oxygen or tertiary amine nitrogen;
X is O or is S or is N-R² or is N-R^{2'},
where R² either
is a monovalent hydrocarbon radical having 1 to 20 C atoms which optionally contains at least one carboxylic ester, nitrile, nitro, phosphonic ester, sulfonyl or sulfonic ester group,
or is a substituent of the formula (II a) or (II b) 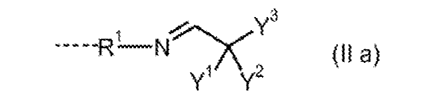 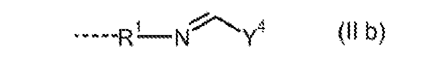 and R^{2'} together with R¹ is a trivalent hydrocarbon radical having 4 to 12 C atoms which optionally contains at least one heteroatom, more particularly in the form of ether oxygen or tertiary amine nitrogen;
and n is 1 or 2 or 3, m is 0 or 1 or 2, with the proviso that m+n is 2 or 3.

2. The one-component, moisture-curing composition of claim 1, **characterized in that** the polyurethane polymer **P1** is present in an amount of 10% - 80% by weight, more particularly of 15% - 50% by weight, based on the weight of the moisture-curing composition.

3. The one-component, moisture-curing composition of any of the preceding claims, **characterized in that** the polyurethane polymer **A** is prepared from a polyurethane polymer **P2** which is solid at room temperature, contains isocyanate groups, and has the formula (III), and from an aldimine **D** of the formula (IV a) or (IV b)
Q⁅NCO]ₘ₊ₙ (III)

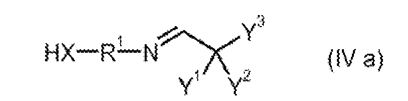

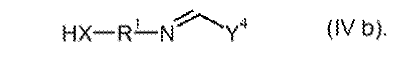

4. The one-component, moisture-curing composition of any of the preceding claims, **characterized in that** Y³ is a radical of the formula (VII') or (VIII') 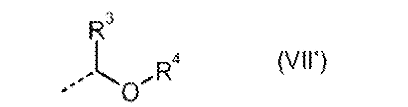 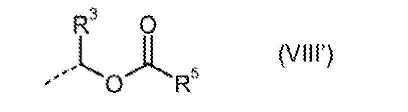 where R³ is a hydrogen atom or is an alkyl or arylalkyl group, preferably a hydrogen atom;
R⁴ is a hydrocarbon radical having 1 to 30, more particularly 12 to 30, C atoms which optionally contains heteroatoms; and
R⁵ alternatively
is a hydrogen atom,
or is a linear or branched alkyl radical having 1 to 30, more particularly 11 to 30, C atoms, optionally with cyclic fractions and optionally with at least one heteroatom,
or is a singly or multiply unsaturated,
linear or branched hydrocarbon radical having 5 to 30 C atoms,
or is an optionally substituted aromatic or heteroaromatic 5- or 6-membered ring.

5. A cured one-component, moisture-curing composition of any of claims 1 - 4, **characterized in that** the moisture-curing composition has been crosslinked with moisture, more particularly in the form of atmospheric moisture or of a water-containing component added to the composition.

6. A method of adhesively bonding a substrate **S1** to a substrate **S2**, comprising the steps of
i) heating a one-component, moisture-curing composition of any of claims 1 to 4 to a temperature above the melting point of the polyurethane polymer **A** of the formula (I a) or (I b), more particularly between 40°C and 100°C;
ii) applying the heated moisture-curing composition to the substrate **S1**;
iii) contacting the applied, moisture-curing composition with the substrate **S2** within the open time;
the substrate **S2** being composed of the same or a different material from the substrate **S1**.

7. A method of adhesively bonding a substrate **S1** to a substrate **S2**, comprising the steps of
i') applying a one-component, moisture-curing composition of any of claims 1 to 4 to the substrate **S1**;
ii') contacting the applied composition with the substrate **S2** within the open time;
iii') chemically crosslinking the composition with moisture;
the substrate **S2** being composed of the same or a different material from the substrate **S1**.

8. The use of a one-component, moisture-curing composition of any of claims 1 to 4, more particularly using a method of claim 7, to bond glazing sheets into a vehicle, more particularly into an automobile.

9. A method of influencing the open time and initial strength of a polyurethane composition by means of a melting component, which constitutes a polyurethane polymer **P2** which contains isocyanate groups and is of the formula (III), **characterized in that** the polyurethane polymer **P2** of the formula (III), containing isocyanate groups, is reacted partly or fully with an aldimine **D** of the formula (IV a) or (IV b)
Q⁅NCO]ₘ₊ₙ (III) 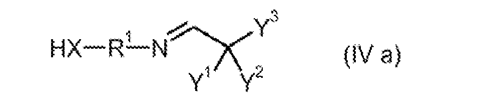 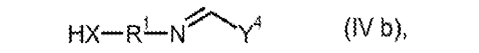
where Q is the radical of a polyurethane polymer **P2**, which is solid at room temperature and has a melting point in the range from 40°C to 80°C, after removal of m+n isocyanate groups;
Y¹ and Y² independently of one another either are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which optionally contains at least one heteroatom, more particularly oxygen in the form of ether, carbonyl or ester groups;
Y⁴ alternatively
is a substituted or unsubstituted aryl or heteroaryl group which has a ring size of between 5 and 8, preferably 6, atoms, or is 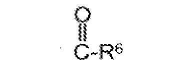 where R⁶ is a hydrogen atom or is an alkoxy group,
or is a substituted or unsubstituted alkenyl or arylalkenyl group having at least 6 C atoms;
R¹ either
is a divalent hydrocarbon radical having 2 to 12 C atoms which optionally contains at least one heteroatom, more particularly in the form of ether oxygen or tertiary amine nitrogen,
or, if X is N-R^{2'}, is together with R^{2'} a trivalent hydrocarbon radical having 4 to 12 C atoms which optionally contains at least one heteroatom, more particularly in the form of ether oxygen or tertiary amine nitrogen;
X is O or is S or is N-R² or is N-R^{2'},
where R² either
is a monovalent hydrocarbon radical having 1 to 20 C atoms which optionally contains at least one carboxylic ester, nitrile, nitro, phosphonic ester, sulfonyl or sulfonic ester group,
or is a substituent of the formula (II a) or (II b) 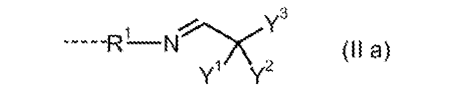 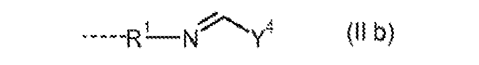 and R^{2'} together with R¹ is a trivalent hydrocarbon radical having 4 to 12 C atoms which optionally contains at least one heteroatom, more particularly in the form of ether oxygen or tertiary amine nitrogen;
and n is 1 or 2 or 3, m is 0 or 1 or 2, with the proviso that m+n is 2 or 3.

10. A polyurethane polymer **A2** which contains aldimine groups, is of the formula (I a') or (I b'), is solid at room temperature, and has a melting point in the range from 40°C to 80°C 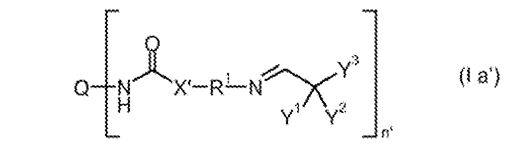 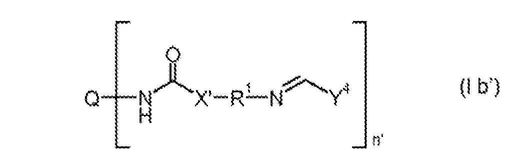 where Q is the radical of a polyurethane polymer **P2**, which is solid at room temperature and has a melting point in the range from 40°C to 80°C, after removal of n' isocyanate groups; Y¹ and Y² independently of one another
either are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which optionally contains at least one heteroatom, more particularly oxygen in the form of ether, carbonyl or ester groups;
Y⁴ alternatively
is a substituted or unsubstituted aryl or heteroaryl group which has a ring size of between 5 and 8, preferably 6, atoms, or is 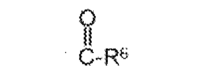 where R⁶ is a hydrogen atom or is an alkoxy group,
or is a substituted or unsubstituted alkenyl or arylalkenyl group having at least 6 C atoms;
R¹ either
is a divalent hydrocarbon radical having 2 to 12 C atoms which optionally contains at least one heteroatom, more particularly in the form of ether oxygen or tertiary amine nitrogen,
or, if X' is N-R^{2'}, is together with R^{2'} a trivalent hydrocarbon radical having 4 to 12 C atoms which optionally contains at least one heteroatom, more particularly in the form of ether oxygen or tertiary amine nitrogen;
X' is O or is N-R² or is N-R²,
where R² either
is an alkyl group having 1 to 4 C atoms, more particularly methyl,
or is -CHR⁷-CH₂R⁸,
where R⁷ is a hydrogen atom or is -COOR⁹
and R⁸ is a hydrogen atom or is -COOR⁹ or -CONHR⁹ or -CONR⁹₂,
where R⁹ is an alkyl group having 1 to 4 C atoms;
and R^{2'} together with R¹ is a trivalent hydrocarbon radical having 4 to 12 C atoms which optionally contains at least one heteroatom, more particularly in the form of ether oxygen or tertiary amine nitrogen;
and n' is 2 or 3, preferably 2.

11. The polyurethane polymer **A2** containing aldimine groups, of claim 10, **characterized in that** polyurethane polymer **P2** is prepared from at least one room-temperature liquid, amorphous, partly crystalline or crystalline polyesterdiol or polycarbonatediol, and from a polyisocyanate, the room-temperature liquid polyesterdiol or polycarbonatediol being solid at a temperature between 0°C and 25°C, and being used always in combination with at least one amorphous, partly crystalline or crystalline polyesterpolyol and/or polycarbonatepolyol.

12. The polyurethane polymer containing aldimine groups, of claim 10 or 11, **characterized in that** it is prepared from a room-temperature solid polyurethane polymer **P2** of the formula (III'), and from an aldimine **D** of the formula (IV a') or (IV b')
Q⁅NCO]_{n'} (III') 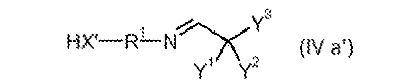 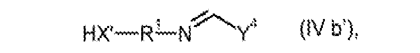
which is in turn prepared from an amine of the formula (V') and from an aldehyde of the formula (VI a) or (VI b)
HX'-R¹-NH₂ (V')

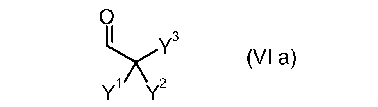

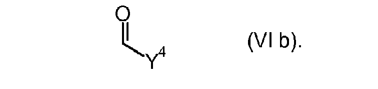

13. The polyurethane polymer containing aldimine groups, of claim 12 **characterized in that** the amine of the formula (V') is selected from the group consisting of N-methyl-1,2-ethanediamine, N-ethyl-1,2-ethanediamine, N-methyl-1,3-propanediamine, N-ethyl-1,3-propanediamine, N-butyl-1,3-propanediamine, N-cyclohexyl-1,3-propanediamine, 4-aminomethylpiperidine, 3-(4-aminobutyl)piperidine, and also products of the Michael-like addition of aliphatic primary diamines with maleic and fumaric diesters, acrylic and methacrylic esters, acrylamides and methacrylamides, preferably with maleic diesters, more particularly dimethyl, diethyl, dipropyl, and dibutyl maleate, and with acrylic esters, more particularly methyl acrylate, reacted in a molar ratio of 1:1; aliphatic hydroxy amines in which the primary amino group are separated from the hydroxyl group by a chain of at least five atoms, or by a ring, more particularly 5-amino-1-pentanol, 6-amino-1-hexanol, and higher homologs thereof, 4-(2-aminoethyl)-2-hydroxyethylbenzene, 3-aminomethyl-3,5,5-trimethylcyclohexanol, 2-(2-aminoethoxy)ethanol, triethylene glycol-monoamine and higher oligomers and polymers thereof, 3-(2-hydroxyethoxy)propylamine, 3-(2-(2-hydroxyethoxy)ethoxy)propylamine, and 3-(6-hydroxyhexyloxy)propylamine.

14. The use of the polyurethane polymer containing aldimine groups, of any of claims 10 to 13, as a melting component in adhesives, sealants, coverings or coatings.

15. The use of the polyurethane polymer containing aldimine groups, of any of claims 10 to 13, as a thickener or as a thixotropic agent for adhesives, sealants, coverings or coatings which are applied at temperatures below the melting point of the polyurethane polymer **A2** containing aldimine groups, more particularly below 40°C, preferably at temperatures between 0°C and 35°C.

## Revendications

1. Composition durcissant sous l'effet de l'humidité, à un composant, comprenant
a) au moins un polymère de polyuréthane **P1** liquide à température ambiante, présentant des groupes isocyanate, et
b) au moins un polymère de polyuréthane **A** solide à température ambiante, présentant des groupes aldimine, de formule (Ia) ou (Ib) présentant un point de fusion dans la plage de 40°C à 80°C 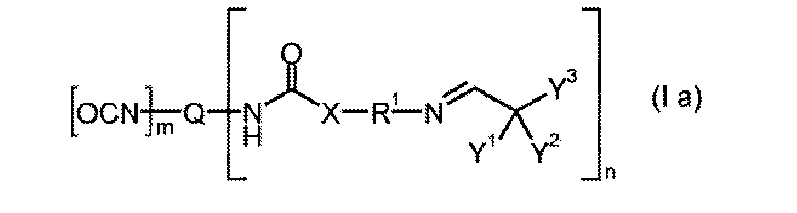 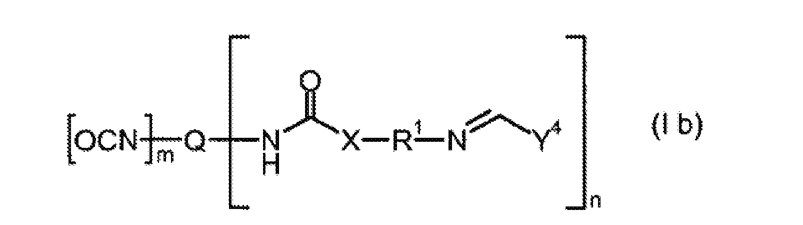
où Q représente le radical d'un polymère de polyuréthane **P2** solide à température ambiante présentant un point de fusion dans la plage de 40°C à 80°C après élimination de m + n groupes isocyanate ;
Y¹ et Y² représentent, indépendamment l'un de l'autre
- soit à chaque fois un radical hydrocarboné monovalent comprenant 1 à 12 atomes de carbone,
- ou ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone;
Y³ représente un radical hydrocarboné monovalent, qui présente le cas échéant au moins un hétéroatome, en particulier de l'oxygène, sous forme de groupes éther, carbonyle ou ester ;
Y⁴ représente
- soit un groupe aryle ou hétéroaryle substitué ou non substitué, qui présente une taille de cycle entre 5 et 8, de préférence 6, atomes,
- ou 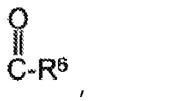 où R⁶ représente un atome d'hydrogène ou un groupe alcoxy,
- ou représente un groupe alcényle ou arylalcényle substitué ou non substitué comprenant au moins 6 atomes de carbone ;
R¹ représente
- soit un radical hydrocarboné divalent comprenant 2 à 12 atomes de carbone, qui présente le cas échéant au moins un hétéroatome, en particulier sous forme d'oxygène de fonction éther ou d'azote de fonction amine tertiaire,
- ou, lorsque X représente N-R^{2'}, ensemble avec R^{2'}, un radical hydrocarboné trivalent comprenant 4 à 12 atomes de carbone, qui contient le cas échéant au moins un hétéroatome, en particulier sous forme d'oxygène de fonction éther ou d'azote de fonction amine tertiaire ;
X représente O ou S ou N-R² ou N-R^{2'},
où R² représente
soit un radical hydrocarboné monovalent comprenant 1 à 20 atomes de carbone, qui présente le cas échéant au moins un groupe ester d'acide carboxylique, nitrile, nitro, ester d'acide phosphonique, sulfone ou ester d'acide sulfonique ;
ou un substituant de formule (IIa) ou (IIb), 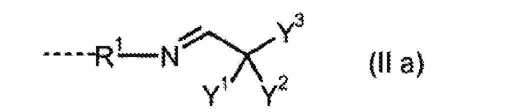 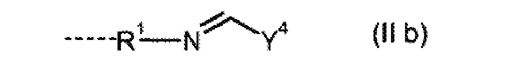 et R²' représente, ensemble avec R¹, un radical hydrocarboné trivalent comprenant 4 à 12 atomes de carbone, qui présente le cas échéant au moins un hétéroatome, en particulier sous forme d'oxygène de fonction éther ou d'azote de fonction amine
tertiaire ;
et n vaut 1 ou 2 ou 3, m vaut 0 ou 1 ou 2, à condition que m + n représente 2 ou 3.

2. Composition durcissant sous l'effet de l'humidité, à un composant selon la revendication 1, **caractérisée en ce que** le polymère de polyuréthane **P1** est présent en une quantité de 10-80% en poids, en particulier de 15-50% en poids, par rapport au poids de la composition durcissant sous l'effet de l'humidité.

3. Composition durcissant sous l'effet de l'humidité, à un composant selon l'une quelconque des revendications précédentes, **caractérisée en ce que** le polymère de polyuréthane **A** est préparé à partir d'un polymère de polyuréthane **P2** solide à température ambiante, présentant des groupes isocyanate de formule (III) et d'une aldimine **D** de formule (IVa) ou (IVb)
Q⁅NCO]ₘ₊ₙ (III)

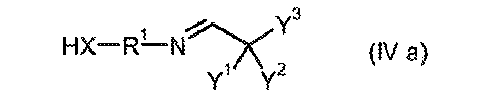

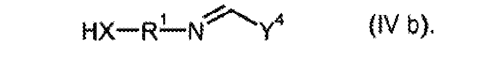

4. Composition durcissant sous l'effet de l'humidité, à un composant selon l'une quelconque des revendications précédentes, **caractérisée en ce que** Y³ représente un radical de formule (VII') ou (VIII') 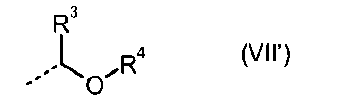 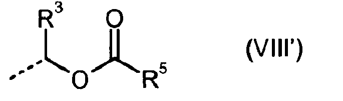 où
R³ représente un atome d'hydrogène ou un groupe alkyle ou arylalkyle, de préférence un atome d'hydrogène ;
R⁴ représente un radical hydrocarboné comprenant 1 à 30, en particulier 12 à 30, atomes de carbone, qui contient le cas échéant des hétéroatomes ; et
R⁵ représente
- soit un atome d'hydrogène,
- ou un radical alkyle linéaire ou ramifié comprenant 1 à 30, en particulier 11 à 30, atomes de carbone, le cas échéant avec des proportions cycliques et le cas échéant au moins un hétéroatome,
- ou un radical hydrocarboné monoinsaturé ou polyinsaturé, linéaire ou ramifié, comprenant 5 à 30 atomes de carbone,
- ou un cycle de 5 ou 6 chaînons le cas échéant substitué, aromatique ou hétéroaromatique.

5. Composition durcissant sous l'effet de l'humidité, à un composant, selon l'une quelconque des revendications 1-4, durcie, **caractérisée en ce que** la composition durcissant sous l'effet de l'humidité a été réticulée avec de l'humidité, en particulier sous forme de l'humidité de l'air ou d'un composant contenant de l'eau ajouté à la composition.

6. Procédé pour le collage d'un substrat **S1** avec un substrat **S2** comprenant les étapes
i) chauffage d'une composition durcissant sous l'effet de l'humidité, à un composant selon l'une quelconque des revendications 1 à 4 à une température supérieure au point de fusion du polymère de polyuréthane **A** de formule (Ia) ou (Ib), en particulier entre 40°C et 100°C ;
ii) application de la composition durcissant sous l'effet de la chaleur, chauffée, sur le substrat **S1** ;
iii) mise en contact de la composition durcissant sous l'effet de l'humidité appliquée avec le substrat **S2** pendant le temps ouvert ;
le substrat **S2** étant constitué par le même matériau que le substrat **S1** ou par un matériau différent du substrat **S1**.

7. Procédé pour le collage d'un substrat **S1** avec un substrat **S2** comprenant les étapes
i') application d'une composition durcissant sous l'effet de l'humidité, à un composant selon l'une quelconque des revendications 1 à 4 sur le substrat **S1** ;
ii') mise en contact de la composition appliquée avec le substrat **S2** pendant le temps ouvert ;
iii') réticulation chimique de la composition avec de l'humidité ;
le substrat **S2** étant constitué par le même matériau que le substrat **S1** ou par un matériau différent du substrat **S1**.

8. Utilisation d'une composition durcissant sous l'effet de l'humidité, à un composant, selon l'une quelconque des revendications 1 à 4, en particulier en utilisant un procédé selon la revendication 7, pour le collage de vitres dans un véhicule, en particulier dans une voiture.

9. Procédé pour influencer le temps ouvert et la résistance initiale d'une composition de polyuréthane au moyen d'un composant de fusion qui présente un polymère de polyuréthane **P2** présentant des groupes isocyanate de formule (III), **caractérisé en ce que** le polymère de polyuréthane **P2** présentant des groupes isocyanate de formule (III) est transformé partiellement ou complètement avec une aldimine **D** de formule (IVa) ou (IVb)
Q⁅NCO]ₘ₊ₙ (III) 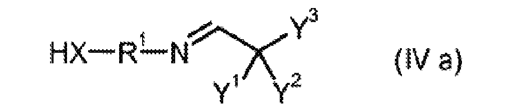 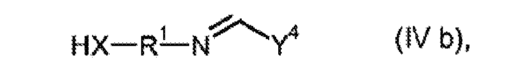
où Q représente le radical d'un polymère de polyuréthane **P2** solide à température ambiante présentant un point de fusion dans la plage de 40°C à 80°C après élimination de m + n groupes isocyanate ;
Y¹ et Y² représentent, indépendamment l'un de l'autre
- soit à chaque fois un radical hydrocarboné monovalent comprenant 1 à 12 atomes de carbone,
- ou ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y³ représente un radical hydrocarboné monovalent, qui présente le cas échéant au moins un hétéroatome, en particulier de l'oxygène, sous forme de groupes éther, carbonyle ou ester ;
Y⁴ représente soit un groupe aryle ou hétéroaryle substitué ou non substitué, qui présente une taille de cycle entre 5 et 8, de préférence 6, atomes,
- ou 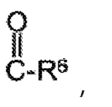 où R6 représente un atome d'hydrogène ou un groupe alcoxy,
- ou représente un groupe alcényle ou arylalcényle substitué ou non substitué comprenant au moins 6 atomes de carbone ;
R¹ représente
- soit un radical hydrocarboné divalent comprenant 2 à 12 atomes de carbone, qui présente le cas échéant au moins un hétéroatome, en particulier sous forme d'oxygène de fonction éther ou d'azote de fonction amine tertiaire,
- ou, lorsque X représente N-R^{2'}, ensemble avec R^{2'}, un radical hydrocarboné trivalent comprenant 4 à 12 atomes de carbone, qui contient le cas échéant au moins un hétéroatome, en particulier sous forme d'oxygène de fonction éther ou d'azote de fonction amine tertiaire ;
X représente O ou S ou N-R² ou N-R^{2'},
où R² représente
- soit un radical hydrocarboné monovalent comprenant 1 à 20 atomes de carbone, qui présente le cas échéant au moins un groupe ester d'acide carboxylique, nitrile, nitro, ester d'acide phosphonique, sulfone ou ester d'acide sulfonique ;
- ou un substituant de formule (IIa) ou (IIb), 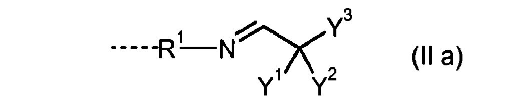 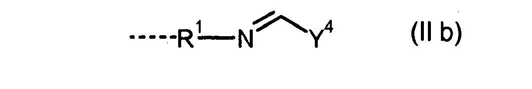
et R^{2'} représente, ensemble avec R¹, un radical hydrocarboné trivalent comprenant 4 à 12 atomes de carbone, qui présente le cas échéant au moins un hétéroatome, en particulier sous forme d'oxygène de fonction éther ou d'azote de fonction amine tertiaire ;
et n vaut 1 ou 2 ou 3, m vaut 0 ou 1 ou 2, à condition que m + n représente 2 ou 3.

10. Polymère de polyuréthane **A2**, présentant des groupes aldimine, de formule (Ia') ou (Ib'), qui est solide à température ambiante et qui présente un point de fusion dans la plage de 40°C à 80°C 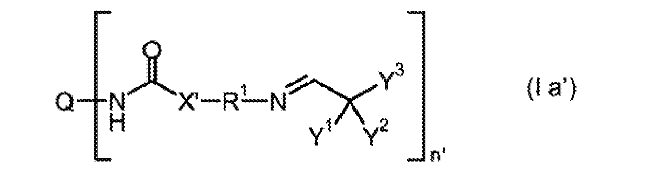 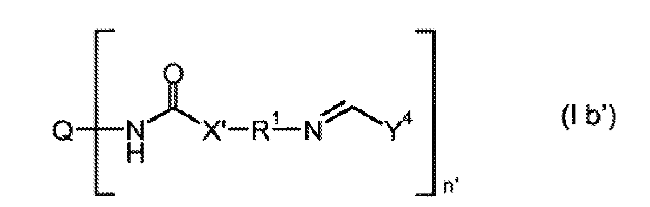 où Q représente le radical d'un polymère de polyuréthane **P2** solide à température ambiante présentant un point de fusion dans la plage de 40°C à 80°C après élimination de n' groupes isocyanate ;
Y¹ et Y² représentent, indépendamment l'un de l'autre
- soit à chaque fois un radical hydrocarboné monovalent comprenant 1 à 12 atomes de carbone,
- ou ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y³ représente un radical hydrocarboné monovalent, qui présente le cas échéant au moins un hétéroatome,
en particulier d'oxygène sous forme de groupes éther, carbonyle ou ester ;
Y⁴ représente
- soit un groupe aryle ou hétéroaryle substitué ou non substitué, qui présente une taille de cycle entre 5 et 8, de préférence 6, atomes,
- ou 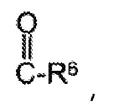 où R⁶ représente un atome d'hydrogène ou un groupe alcoxy,
- ou un groupe alcényle ou arylalcényle substitué ou non substitué comprenant au moins 6 atomes de carbone ;
R¹ représente
- soit un radical hydrocarboné divalent comprenant 2 à 12 atomes de carbone, qui contient le cas échéant au moins un hétéroatome, en particulier d'oxygène de fonction éther ou d'azote de fonction amine tertiaire,
- ou, lorsque X' représente N-R^{2'}, ensemble avec R^{2'} un radical hydrocarboné trivalent comprenant 4 à 12 atomes de carbone, qui contient le cas échéant au moins un hétéroatome, en particulier sous forme d'oxygène de fonction éther ou d'azote de fonction amine tertiaire ;
X' représente O ou N-R² ou N-R^{2'},
où
R² représente
- soit un groupe alkyle comprenant 1 à 4 atomes de carbone, en particulier méthyle ;
ou représente -CHR⁷-CH₂R⁸,
où R⁷ représente un atome d'hydrogène ou -COOR⁹ et R⁸ représente un atome d'hydrogène ou -COOR⁹ ou -CONHR⁹ ou -CONR⁹₂,
où R⁹ représente un groupe alkyle comprenant 1 à 4 atomes de carbone ;
et
R^{2'} représente, ensemble avec R¹, un radical hydrocarboné trivalent comprenant 4 à 12 atomes de carbone, qui contient le cas échéant au moins un hétéroatome, en particulier sous forme d'oxygène de fonction éther ou d'azote de fonction amine tertiaire ;
et
n' vaut 2 ou 3, de préférence 2.

11. Polymère de polyuréthane **A2** présentant des groupes aldimine selon la revendication 10, **caractérisé en ce que** le polymère de polyuréthane **P2** est préparé à partir de polyesterdiol ou de polycarbonatediol liquide au moins à température ambiante, amorphe, partiellement cristallin ou cristallin, et d'un polyisocyanate, le polyesterdiol ou le polycarbonatediol liquide à température ambiante étant solide à une température entre 0°C et 25°C, et est toujours utilisé en combinaison avec au moins un polyesterpolyol et/ou polycarbonatepolyol amorphe, partiellement cristallin ou cristallin.

12. Polymère de polyuréthane présentant des groupes aldimine selon la revendication 10 ou 11, **caractérisé en ce qu'**il est préparé à partir d'un polymère de polyuréthane **P2** solide à température ambiante de formule (III') et d'une aldimine **D** de formule (IVa') ou (IVb')
Q⁅NCO]_{n'} (III') 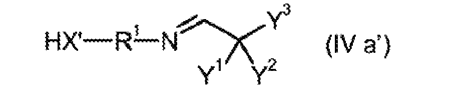 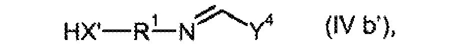
qui est préparée à son tour à partir d'une amine de formule (V') et d'un aldéhyde de formule (VIa) ou (VIb)

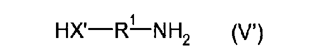

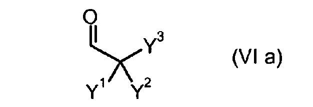

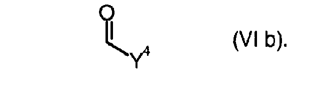

13. Polymère de polyuréthane présentant des groupes aldimine selon la revendication 12, **caractérisé en ce que** l'amine de formule (V') est choisie dans le groupe constitué par la N-méthyl-1,2-éthanediamine, la N-éthyl-1,2-éthanediamine, la N-méthyl-1,3-propanediamine, la N-éthyl-1,3-propanediamine, la N-butyl-1,3-propanediamine, la 4-aminométhylpipéridine, la 3-(4-aminobutyl)-pipéridine, ainsi que de produits provenant de l'addition de type Michaël de diamines primaires aliphatiques sur des diesters de l'acide maléique et fumarique, des esters de l'acide acrylique et méthacrylique, des amides de l'acide acrylique et méthacrylique, de préférence sur des diesters de l'acide maléique, en particulier l'ester diméthylique, diéthylique, dipropylique et dibutylique de l'acide maléique, et sur des esters de l'acide acrylique, en particulier l'ester méthylique de l'acide acrylique, transformés dans un rapport molaire de 1:1 ; les hydroxyamines aliphatiques, dans lesquelles le groupe amino primaire est séparé du groupe hydroxy par une chaîne d'au moins 5 atomes ou par un cycle, en particulier le 5-amino-1-pentanol, le 6-amino-1-hexanol et leurs homologues supérieurs, le 4-(2-aminoéthyl)-2-hydroxyéthylbenzène, le 3-aminométhyl-3,5,5-triméthylcyclohexanol, le 2-(2-aminoéthoxy)-éthanol, la triéthylèneglycolmonoamine et ses oligomères et polymères supérieurs, la 3-(2-hydroxyéthoxy)-propylamine, la 3-(2-(2-hydroxyéthoxy)-éthoxy)-propylamine ainsi que la 3-(6-hydroxyhexyloxy)-propylamine.

14. Utilisation du polymère de polyuréthane présentant des groupes aldimine selon l'une quelconque des revendications 10 à 13 comme composant de fusion dans des adhésifs, des substances d'étanchéité, des garnitures ou des revêtements.

15. Utilisation du polymère de polyuréthane présentant des groupes aldimine selon l'une quelconque des revendications 10 à 13 comme épaississant ou agent thixotropique pour des adhésifs, des substances d'étanchéité, des garnitures ou des revêtements, qui sont appliqués à des températures inférieures au point de fusion du polymère de polyuréthane **A2** présentant des groupes aldimine, en particulier inférieures à 40°C, de préférence à des températures entre 0°C et 35°C.
